(19) Europäisches Patentamt / European Patent Office / Office européen des brevets

(11) **EP 4 682 477 A1**

(12) # EUROPEAN PATENT APPLICATION

(43) Date of publication:
**21.01.2026 Bulletin 2026/04**

(21) Application number: **24189175.3**

(22) Date of filing: **17.07.2024**

(51) International Patent Classification (IPC):
**G01F 1/66** *(2022.01)* **G01F 1/667** *(2022.01)*
**G01F 15/14** *(2006.01)* **G01F 15/18** *(2006.01)*
**G01F 1/05** *(2006.01)*

(52) Cooperative Patent Classification (CPC):
**G01F 1/662; G01F 1/667; G01F 15/14;
G01F 15/185;** G01F 1/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sensus Spectrum LLC
Morrisville (US)**

(72) Inventors:
- **Boxall, Matthew**
  **Cambridge (GB)**
- **Davey, Benjamin**
  **Cambridge (GB)**
- **Paterson, Charlie**
  **Cambridge (GB)**
- **Smith, James**
  **Holly Springs (US)**
- **Zhao, Zijian**
  **Cambridge (GB)**
- **Healy, David**
  **Stowmarket (GB)**

(74) Representative: **Piotrowicz, Pawel Jan Andrzej et al
Venner Shipley LLP
406 Cambridge Science Park
Milton Road
Cambridge CB4 0WW (GB)**

(54) **A MULTI-PART ASSEMBLY FOR RETROFITTING INTO A PASSAGE OF A MECHANICAL FLOW METER**

(57)     A multi-part assembly for retrofitting into a passage of a mechanical flow meter so as to form an ultrasonic flow meter is described. The multi-part assembly comprises an ultrasonic flow measurement unit, first and second flow-modifying segments arranged either side of the ultrasonic flow measurement unit to form a flow passage through the first flow-modifying segment, the ultrasonic flow measurement unit and the second flow-modifying segment between respective distal ends of the first and second flow-modifying segments, each of the first and second flow-modifying segments having respective proximal ends, and first and second connectors arranged on the respective proximal ends of the first and second flow-modifying segments configured to connect to respective first and second connectors on the ultrasonic flow measurement unit.

Figure 1

EP 4 682 477 A1

## Description

### Field

The present invention relates to multi-part assemblies for retrofitting into a passage of a mechanical flow meter to form an ultrasonic flow meter.

### Background

Water utilities rely on accurate water-metering at commercial and industrial customer sites for a large portion of their revenue. This is driving a shift from less accurate, narrow flow range, high-wearing, mechanical water-meters to high accuracy, wide flow range, low-wearing, static water-meters. Many of the static meters used in this application are based on measurement of time-of-flight of ultrasonic sound waves in the direction of flow, as described in patents to be supplied.

Meters in commercial and industrial applications are on average larger than those found in residential applications, with a typical product ranging from 8.5kg-311kg (e.g., Sensus Omni). Maintenance manuals specify use of hoists for installation of most meter sizes. This process makes replacement of the entire meter undesirable when the measurement parts become worn. Most mechanical commercial and industrial meters therefore contain all the wearing metrology elements in a top-loaded measurement insert that can be replaced when it wears out without having to detach the meter body from the pipework.

Switching from a mechanical to a higher accuracy ultrasonic water-meter requires the entire meter to be replaced because the geometry of mechanical water-meter bodies is not compatible with a high accuracy ultrasonic measurement. This stems from the fact that the flow-conditioning required for an ultrasonic flow measurement (flow acceleration and establishment of fully developed flow profile) is not present in a mechanical meter body. The result is significantly higher cost and disruption to customers who undertake a switch from mechanical to static metering.

High accuracy ultrasonic meters accelerate the flow into a narrowed cross-sectional area of high measurement sensitivity over a long distance, to ensure the flow profile is fully established by the point of measurement. They typically have an acceleration factor (water velocity at measurement divided by water velocity at meter inlet) of 1.5-2.5. The narrowing and acceleration are advantageous for two primary reasons:

- Signal is proportional to flow speed in the measured area, so the flow acceleration increases the signal-to-noise ratio of the measurement, allowing accurate measurement over a wider flow-range; and
- A larger measurement area requires more sensor elements to maintain accuracy, increasing the cost of measurement hardware and / or increasing power consumption of that hardware.

An extended length of conditioning is required to reduce the influence of upstream disturbances, ensure the boundary layer is fully established at a broad range of flow rates before measurement and to make sure the flow doesn't detach from the walls due to any inertial effects due to abrupt changes in wall angle, which can lead to non-linearity, measurement noise and increased non-recoverable pressure loss.

Contrary to in ultrasonic flow measurement, turbine meters are not particularly sensitive to the shape of the velocity profile. A published study (Park J.T., "Reynolds Number and Installation Effects on Turbine Meters", Fluid Flow Measurement 3r6 International Symposium, March 1995) indicates no requirement for fully developed flow profiles, and that no significant errors are evident when installing turbine meters downstream of two elbows out-of-plane without flow conditioning devices, a configuration often used as a worst-case upstream disturbance in water-meter testing.

Moreover, mechanical meters typically do not accelerate, and in some cases, they decelerate the flow as it approaches the measurement section. Expansion of the cross-sectional area can be useful in mechanical meters to compensate for the reduction in available flow area due to physical metering elements in the flow. It is also sometimes needed to shift upwards the flow range over which the meter reads linearly. Decelerating the flow can also help reduce frictional forces on the flow and on the metering parts. This reduced friction reduces wear of the moving parts. Flow deceleration is conducted in the meter body, not the measurement insert. Some turbine water-meter bodies decelerate the flow by a factor of almost two from the water-meter inlet to the measurement insert inlet.

US8516901B2 describes a static measurement insert to be inserted into a mechanical meter body. However, the performance achieved by existing retro-fit static metering solutions is limited by the lack of appropriate flow conditioning, and the inability to achieve significant flow acceleration in the short length of the measurement insert.

Short conditioning length and fast compression of the flow directly before ultrasonic flow measurement will result in:

- exaggerated influence of small upstream disturbances on the measurement accuracy, as flow-conditioning is minimal;

- measurement noise caused by transient fluid behaviour due to flow separation in the measurement insert following abrupt changes in direction of the flow;
- increased non-linearity over the range of flow-rates, as boundary layers have less axial distance to establish;
- large irrecoverable pressure loss (regulated against in most countries); and
- wear to the measurement section.

**Summary**

According to a first aspect of the invention, there is provided a multi-part assembly for retrofitting into a passage of a mechanical flow meter so as to form an ultrasonic flow meter, the multi-part assembly comprising an ultrasonic flow measurement unit, first and second flow-modifying segments arranged either side of the ultrasonic flow measurement unit to form a flow passage through the first flow-modifying segment, the ultrasonic flow measurement unit and the second flow-modifying segment between respective distal ends of the first and second flow-modifying segments, each of the first and second flow-modifying segments having respective proximal ends; and, first and second connectors arranged on the respective proximal ends of the first and second flow-modifying segments configured to connect to respective first and second connectors on the ultrasonic flow measurement unit.

Using such an assembly, a mechanical flow meter can be converted to an ultrasonic flow meter which can calculate the flow of fluid through the flow passage of the ultrasonic flow measurement unit, for example, by using time-of-flight measurements between first and second ultrasonic transducers. The mechanical flow meter can be retrofitted by inserting the first and second flow-modifying segments and the ultrasonic flow measurement unit through a non-flow access aperture of the mechanical flow meter, with or without detaching the meter from the surrounding pipework. Therefore, a mechanical flow meter can be upgraded or updated to an ultrasonic flow meter without disconnecting it from the connected pipes. Thus, the life of an existing (mechanical) flow meter can be extended, reducing waste, costs, and downtime where no flow can occur, and no measurements be recorded.

The outer body or shell of the of the first and second flow-modifying segments may be cylindrical, or substantially cylindrical. Between 25% and 75% of the outer body or shell may be cylindrical.

The distal ends of the first and second segments therefore allow for a smooth transition from the inside of the flow meter to the flow passage of the first and second segments.

The connector may rigidly link the proximal ends of the segments to the ultrasonic flow measurement unit.

Retrofitting may mean installing the segments into an existing meter. The first and second flow-modifying segments may act as additional internal respective first and second linings for the existing flow meter.

The flow passage may decrease in cross-sectional area by greater or equal to 25% between the distal end of the first segment and the centre of the ultrasonic flow measurement unit and/or the flow passage may increase in cross-sectional area by greater or equal to 33% between the centre of the ultrasonic flow measurement unit and the distal end of the second segment.

The cross section of the flow passage at the centre of the ultrasonic flow measurement unit may be rectangular, or rounded rectangular. Rounded rectangular may mean a rectangle with rounded corners. That is, the cross-sectional area has first and second opposite sides of the same length and third and fourth opposite sides of the same length, wherein the first and second sides are longer than the third and fourth sides and the corners where each side joins are rounded.

The cross section of the flow passage at the centre of the ultrasonic flow measurement unit may be circular, oval, or a flattened circle. Flattened circle means a round cross-section with flat sections.

The length of the assembly may be greater or equal to three times the internal diameter of the inlet of the flow meter to be retrofitted.

The length of the assembly when first and/or second segments are connected to the ultrasonic measurement unit may be greater than the widest part of an access aperture of the flow meter to be retrofitted.

Thus, the flow can be conditioned more than a typical or standard top-loaded insert which is placed through the aperture into the centre of the flow meter to be retrofitted. Greater flow conditioning before flow measurement may allow for greater accuracy in flow measurements in the ultrasonic flow measurement unit.

The length in the direction of the flow passage of the first and/or second segment connected to the ultrasonic flow measurement unit is greater than the widest part of an access aperture of the flow meter to be retrofitted.

The distal ends of the first and/or second segments may be compliant for aiding seating of the multi-part assembly in the passage of the flow meter.

The relatively more compliant distal ends of the first and second segments may allow for a smooth transition from the internal wall of the flow meter to be retrofitted to the flow passage of the first and second segments, and the ultrasonic flow measuring unit. This smooth transition may allow for reduced turbulence in fluid flow from the flow meter to be retrofitted to the ultrasonic flow measuring unit, which may aid more accurate flow speed results.

The first and second segments and the ultrasonic flow measuring unit may consist of or comprise plastic. The flow meter to be retrofitted may consist of or comprise metal, particularly in the internal walls of the flow meter/flow meter chamber.

The distal ends may form a lip seal from the distal end to the internal walls of the flow meter to be retrofitted.

The proximal ends of the first and/or second segments may be less compliant than the distal ends.

The proximal ends may be more ridged than the distal ends, which may aid with the connection to the ultrasonic flow measuring unit.

The distal ends may allow a greater than or equal to 1% reduction in the cross-sectional area of the flow passage.

For example, when fitted within the flow meter body, the distal end may be compliant enough to reduce the cross-sectional area of the flow passage (that is, in a plane perpendicular to the axis in line within the direction of the fluid flow through the flow passage) by greater than or equal to 1%.

The distal end of the first segment and/or the distal end of the second segment may comprise a notch.

The notch may be, for example, a U-shaped or a V-shaped cut from the distal end towards the proximal end of the segment.

The distal end of the first segment and/or the distal end of the second segment may be configured to fold or crinkle.

The distal ends of one or both of the segments may be thinner, or made from a different, more compliant material than the rest of the segment.

The first and/or second segments may increase in at least external diameter or circumference from a point between one-quarter and three-quarters along the length of the segment from the proximal to distal end, to the distal end.

The distal end of the first and/or second segments may increase in at least external diameter from between a third and two-thirds of the length of the segment along the direction of the flow passage.

The first and/or second segment may comprise a wall which defines their respective portion of the flow passage. The thickness of the wall may be greater at the proximal end than at the distal end.

The thickness of the wall of the distal end of the first and/or second segments decreases from between a third and two-thirds of the length of the segment along the direction of the flow passage.

In other words, the thickness of the wall may reduce in thickness or may taper so that it is thinner at the distal end of the first and/or second segments, and thicker at the proximal end of the segment, which may allow the material to be more compliant and/or malleable, and so it is easier to fit into or better fits into the flow meter which is being retrofitted. The tapering of each of the distal ends of the segments may taper to a point.

The access aperture of the flow meter may be the access aperture of the flow meter body.

The length in the direction of the flow passage (that is, the intended direction of fluid flow) of the first segment may be between 84 mm and 90 mm, for example it may be 87 mm. The width of the first segment in a direction perpendicular to the direction of the flow passage may be between 70 mm and 76 mmm for example, it may be 73 mm.

The length in the direction of the flow passage (that is, the intended direction of fluid flow) of the second segment may be between 60 mm and 66 mm, for example it may be 63 mm. The width of the second segment in a direction perpendicular to the direction of the flow passage may be between 75 mm and 81 mmm for example, it may be 78 mm.

The width, or greatest dimension, of the access aperture of the flow meter to be retrofitted may be between 50 mm and 58 mm, for example, 54 mm.

The compliance of the distal ends of the first and second segments may allow the distal ends of the segments to sit flush with the internal mechanical flow meter body.

For example, regardless of small part-to-part variation in the original body size and surface irregularities.

The first and/or second segment may comprise a positioning member and, optionally, a second and/or third positioning member.

At least part of the positioning member may be resilient and/or compliant.

The positioning member may be connected to the segment and directed away from the flow passage.

That is, the positioning member of the first segment is connected to the first segment, and the positioning member of the second segment is connected to the second segment. The positioning member may form part of the first or second segment, that is, fused to the first or second segment, or it may be connected to or attached to the first or second segment. The positioning member may be directed towards the proximal end of the segment.

The positioning member may be arranged at an angle between 10° and 35° with respect to the external surface of the segment.

The positioning member may be arranged at an angle between 18° and 26° with respect to the external surface of the segment.

The positioning member may have a greater resilience and/or stiffness in a first plane, defined by the axis through the centre of the flow passage of the first or second segment and the positioning member, than it does in a second plane perpendicular to the first plane.

The positioning member may have a greater flexibility in the first plane than it does in a third plane perpendicular to the first plane and the second plane.

The positioning member may allows for a greater or equal to +/-0.5% change in a width or diameter between the walls of the flow meter to be retrofitted.

The second or third positioning member may have the same features as the first or second positioning member.

The second and/or third positioning member may have either a greater or lower resilience, flexibility, and/or stiffness than the first positioning member.

Thus, there may be a centrally located positioning member (first positioning member) which may be arranged, for example, on the first and/or second segment opposite the access aperture of the flow meter to be retrofitted when inserted into the flow meter which may be less flexible, stiffer, or have greater resilience than second and/or third positioning member(s) arranged either side of the flow passage. Having the first positioning member be stiffer, less flexible, have greater resilience than the second and third positioning members may aid with the correct positioning of the first and second segments with respect to the mechanical flow meter internal walls.

The first and/or second segment may comprise a positioning member receiving section.

The positioning member receiving section may be a groove, a notch, or a connector in the first or second segment which is suitable for receiving a positioning member.

The positioning member may be a resilient member which can connect to the positioning member receiving section and be arranged between the first or second segment and the internal wall of the flow meter to be retrofitted. The positioning member may be a spring.

The positioning member receiving section in the first or second segment may be configured to receive an O-ring, or a gasket, spring, leaf spring, resilient member, a cradle, or a washer.

The O-ring, gasket or washer may be compliant or flexible. The O-ring, gasket or washer may be placed to engage with the positioning member receiving section and sit between the first or second segment and the internal wall of the flow meter to be retrofitted.

The first and/or second segment may comprise a second and/or third positioning member receiving section.

The first and second segments may be sprung to push them in the direction of the access aperture of the mechanical flow meter.

When inserting the ultrasonic flow measuring unit, it may push the first and second segments away from the access aperture of the mechanical flow meter.

Thus, the act of inserting the ultrasonic flow measuring unit may move the three parts into the correct position for measuring the flow using the ultrasonic flow measuring unit.

The first and/or second segment may comprise a collar surrounding the proximal end, and, the ultrasonic flow measurement unit may comprise first, and second collars arranged to engage with the respective collars of the first and second segments.

The collars of the first and/or second segments, and the first and second collars of the measurement insert may be arranged to be perpendicular to the axis defined by the centre of the flow passage. When the first and second segments are connected to the measurement unit, the collars may be flush to each other.

The collars of the first and second segments may be curved away from the proximal end, and the first and second collars of the ultrasonic flow measurement unit are curved towards the centre of the ultrasonic flow measurement unit.

If the first and/or second connector of the respective first or second segment is a plug, the corresponding first and/or second connector on the ultrasonic measurement unit maybe a socket. If the first and/or second connector of the respective first or second segment is a socket, the corresponding first and/or second connector on the ultrasonic measurement unit may be a plug.

The first and/or second connector of the respective first or second segment may be a hook; and the first and/or second connector on the ultrasonic measurement unit may be a corresponding interconnecting hook configured to connect with the hook of the first or second segment.

The connectors may further require a pin to secure them in place and increase the security and stability of the flow passage.

When the first and second connectors of the respective first and second segments are connected to their respective first and second connectors of the ultrasonic measurement unit, the first segment, ultrasonic flow measurement unit, and the second segment may be aligned to form the flow passage.

The ultrasonic measurement unit may be connected to a lid which is configured to seal the first and second segments, and the ultrasonic measurement unit into the flow meter to be retrofitted.

Once the ultrasonic measurement unit is connected to the first and second segments, and all three parts may be sealed into the flow meter to be retrofitted, the ultrasonic flow measurement unit is rigidly fixed in position.

The ultrasonic flow measurement unit may comprise first, and second acoustic transducers, these may be configured to perform a time-of-flight flow measurement.

The ultrasonic flow measurement unit may comprise a reflector for reflecting an ultrasonic wave from the first transducer and directing it towards the second transducer and reflect an ultrasonic wave from the second transducer and directing it towards the first transducer.

The reflector may be a metal sheet, or other material, attached to the main body of the measurement unit.

The ultrasonic flow measurement unit may comprise a lid configured to form a seal with a rim of an access aperture of the flow meter to be retrofitted.

The body of the flow meter may or may not be a casting.

The ultrasonic flow measurement unit may comprise first and second acoustic transducers and wherein the shape and/or size of the cross section of the flow passage is uniform between the first and second transducers.

The ultrasonic flow measuring unit when connected to the first and second flow modifying segments may have a greater or equal to 2% error over a measurement range where the largest flow rate is 500 times greater than the smallest flow rate.

When the first and second flow modifying segments are connected to the ultrasonic flow meter, there may be a smooth transition between the flow passage of the first segment to the flow passage of the ultrasonic measurement unit, and from the flow passage of the ultrasonic measurement unit to the flow passage of the second segment.

According to a second aspect of the invention, there is provided a kit for the multi-part assembly of the first aspect, the kit including an ultrasonic flow measurement unit, first and second flow-modifying segments for arranging either side of the ultrasonic flow measurement unit to form a flow passage through the first flow-modifying segment, the ultrasonic flow measurement unit and the second flow-modifying segment between respective distal ends of first and second flow-modifying segments, each of the first and second flow-modifying segments having respective proximal ends; and first and second connectors arranged on the respective proximal ends of the first and second flow-modifying segments configured to connect to respective first and second connectors on the ultrasonic flow measurement unit.

According to a third aspect of the invention, there is provided a method of retrofitting a passage of a mechanical flow meter so as to form an ultrasonic flow meter, the method comprising inserting the first segment of any of claims 1 to 16 through an access aperture of the flow meter and positioning the segment at least partially in a first direction away from the access aperture, inserting the second segment of any of claims 1 to 16 through the access aperture of the flow meter and positioning the segment at least partially in a second direction away from the access aperture; and inserting the ultrasonic flow measurement unit of any of claims 1 to 16 through the flow meter aperture and engaging the connectors of the ultrasonic flow measurement unit with the connectors of the first and second segments.

The second direction may be opposite to the first direction.

The ultrasonic flow meter may be an installed or retrofitted into a mechanical flow meter, that is, attached to a first pipe which allows fluid to flow from the pipe, through the flow meter, and out of the flow meter through a second pipe. The first direction may be upstream of the aperture. The second direction may be downstream of the aperture.

The engagement of the ultrasonic flow measurement unit with the first and second segments may be the engagement of the connectors, for example, a plug and socket, a pair of inter-linking notches, or other suitable connection. The engagement of the ultrasonic flow measurement unit with the first and second flow-modifying segments may ensure that the three parts are arranged and/or oriented correctly with respect to each other to form an ultrasonic flow meter.

The access aperture may be a non-flow access aperture. That is, the access aperture may be an aperture for accessing the mechanical flow meter only, and not an aperture intended for fluid to flow though during normal operation.

The multi-part assembly of the first aspect, or the kit of the second aspect, or the method of the third aspect, wherein the flow meter may be a turbine mechanical flow meter.

The flow meter may be a Woltmann or Woltman mechanical flow meter, a Sensus Woltmann (or Woltman) mechanical flow meter, or a MeiStream mechanical flow meter. The flow meter may be a MeiStream Plus, a MeiStreamRF a MeiStreamRF Plus, an OMNI $R^2$, an OMNI Compound ($C^2$), an OMNI Fire Hydrant ($H^2$) and OMNI Fireline ($F^2$), an OMNI Turbo ($T^2$), an OMNI Verification ($V^2$), an OMNI+ $R^2$, an OMNI+ Compound ($C^2$), an OMNI+ Fire Hydrant ($H^2$) and OMNI+ Fireline ($F^2$), an OMNI+ Turbo ($T^2$), or an OMNI+ Verification ($V^2$).

The first and second segments may be constructed such that they comply with poka-yoke, that is, that the first segment can only be inserted in a first direction away from the mechanical flow meter body aperture, and the second segment can only be inserted in a second direction away from the mechanical flow meter body aperture.

The first and second segments may be constructed such that they comply with poka-yoke, that is, when using the poka-yoke construction, the first segment can only be inserted in a first direction away from the mechanical flow meter body aperture, and the second segment can only be inserted in a second direction away from the mechanical flow meter body aperture.

Where the mechanical flow meter body of the original meter (that is, the one to be retrofitted) is asymmetric, the distal ends of the first and second segments may have different diameters or circumferences and/or the length of the first and second segments may be different, so they may only mate with the mechanical flow meter body when inserted in the correct direction and/or orientation. For example, with such an arrangement, least one of the first or second segments may not fit into the mechanical flow meter body if inserted into the wrong end or in the wrong direction (e.g., upstream instead of downstream) of the mechanical flow meter.

Where the mechanical flow meter body of the original meter (that is, the one to be retrofitted) is either asymmetric or symmetric, the positioning member(s) of the first segment may be in a different position to the positioning members of the second segment. The difference between the arrangements of the positioning members of the first and second segments may ensure that the first or second segment cannot be inserted into the incorrect part of the mechanical flow meter body, thus, an installer of the multi-part assembly can only insert the parts into the intended end or direction of the mechanical flow meter body.

**Brief description of the drawings**

Certain embodiments of the present invention will now be described, by way of example, with reference to the accompanying drawings, in which:

Figure 1 is a perspective view of first and second segments, and an ultrasonic flow measurement unit for inserting into a flow meter body;
Figure 2 is a system block diagram of a multi-part assembly to form an ultrasonic flow meter;
Figure 3 is a system block diagram of a kit for a multi-part assembly to form an ultrasonic flow meter;
Figure 4 is a perspective exploded view of a mechanical flow meter;
Figure 5 is a cross section of a first mechanical flow meter body;
Figure 6 is a cross section of a second mechanical flow meter body;
Figure 7 is a cross section of a mechanical flow meter in a mechanical flow meter body;
Figure 8 is a process flow diagram for retrofitting a mechanical flow meter body to make an ultrasonic flow meter;
Figure 9 is a cross section of a mechanical flow meter body with a cross section of a mechanical flow meter removed from the mechanical flow meter body;
Figure 10 is a cross section of the mechanical flow meter body of Figure 9 with a cross section of a first and second flow-modifying segments and an ultrasonic flow measuring unit;
Figure 11 is a cross section of the mechanical flow meter body of Figure 9 with a cross section of a first and second flow-modifying segments inserted into their position in use and a cross section of an ultrasonic flow measuring unit;
Figure 12 is a cross section of a mechanical flow meter body and with a cross section of the first and second flow-modifying segments, and a cross section of the ultrasonic flow measurement unit in their flow-measuring position;
Figure 13 is a perspective view of a mechanical flow meter body with the mechanical flow meter unit shown above the body;
Figure 14 is a perspective view of the mechanical flow meter body of Figure 13 with a first flow-modifying segment partially inserted into the mechanical flow meter body, and a second flow-modifying segment and an ultrasonic flow measuring unit depicted above the mechanical flow meter body aperture;
Figure 15 is a top view of an ultrasonic flow measuring unit;
Figure 16 is a perspective view of the ultrasonic flow measuring unit of Figure 15;
Figure 17 is a first side view of the ultrasonic flow measuring unit of Figure 15;
Figure 18 is a second side view, perpendicular to the first side view, of the ultrasonic flow measuring unit of Figure 15;
Figure 19 is a bottom view of the ultrasonic flow measuring unit of Figure 15;
Figure 20 is a cross section of the ultrasonic flow measurement unit of Figure 15;
Figure 21 is a top view of a first flow-modifying segment;
Figure 22 is a perspective view of the first flow-modifying segment of Figure 21;
Figure 23 is a first side view of the first flow-modifying segment of Figure 21;
Figure 24 is a second side view, perpendicular to the first side view, of the first flow-modifying segment of Figure 21;
Figure 25 is a bottom view of the first flow-modifying segment of Figure 21;
Figure 26 is a cross section of the first flow-modifying segment of Figure 21;
Figure 27 is a top view of a second flow-modifying segment;
Figure 28 is a perspective view of the second flow-modifying segment of Figure 27;
Figure 29 is a first side view of the second flow-modifying segment of Figure 27;
Figure 30 is a second side view, perpendicular to the first side view, of the second flow-modifying segment of Figure 27;
Figure 31 is a bottom view of the first flow-modifying segment of Figure 27;
Figure 32 is a cross section of the first flow-modifying segment of Figure 27;
Figure 33 is a perspective view of a second, first or second flow-modifying segment;
Figure 34 is a side view of the second, first or second flow-modifying segment of Figure 34;
Figure 35 is a top view of a third, first or second flow-modifying segment;
Figure 36 is a perspective view of the third, first or second flow-modifying segment of Figure 35;
Figure 37 is a first side view of the third first or second flow-modifying segment of Figure 35;
Figure 38 is a second side view, perpendicular to the first side view, of the third flow-modifying segment of Figure 35;

Figure 39 is a third side view, perpendicular to the second side view and 180° from the first side view, of the third flow-modifying segment of Figure 35;

Figure 40 is a bottom view of the first flow-modifying segment of Figure 27;

Figure 41 is a cross section of part of a mechanical flow meter body with a first flow-modifying segment inserted in a flow-modifying position;

Figure 42 are flow velocity contours at 0.1m/s intervals in a cross-section taken perpendicular to the flow direction, 10mm upstream of the centre of the ultrasonic flow measurement unit when installed in a mechanical body without conditioning, generated by a computational fluid dynamic model at nominal flow speed;

Figure 43 are flow velocity contours at 0.1m/s intervals in a cross-section taken perpendicular to the flow direction, 10mm downstream of the centre of the ultrasonic flow measurement unit when installed in a mechanical body without conditioning, generated by a computational fluid dynamic model at nominal flow speed;

Figure 44 are flow velocity contours at 0.1m/s intervals in a cross-section taken perpendicular to the flow direction, 10mm upstream of the centre of the ultrasonic flow measurement unit when installed in a mechanical body with up and downstream flow-modifying segments in place, generated by a computational fluid dynamic model at nominal flow speed;

Figure 45 are flow velocity contours at 0.1m/s intervals in a cross-section taken perpendicular to the flow direction, 10mm downstream of the centre of the ultrasonic flow measurement unit when installed in a mechanical body with up and downstream flow-modifying segments in place, generated by a computational fluid dynamic model at nominal flow speed;

Figure 46 is a depiction of flow in a computational fluid dynamic model of the nominal flow-rate through a ultrasonic measurement insert in a mechanical meter body without conditioning;

Figure 47 is a depiction of flow in a computational fluid dynamic model of the nominal flow-rate through a ultrasonic measurement insert in a mechanical meter body with up and downstream flow-modifying segments in place;

Figure 48 is a schematic cross-section which illustrates an ultrasonic time-of-flight flow rate meter which is useful for understanding the invention; and

Figure 49 is a schematic cross-section which illustrates another ultrasonic time-of-flight flow rate meter which is useful for understanding the invention.

**Detailed description of certain embodiments**

In the following, like parts are denoted by like reference numbers.

Multi-part assembly

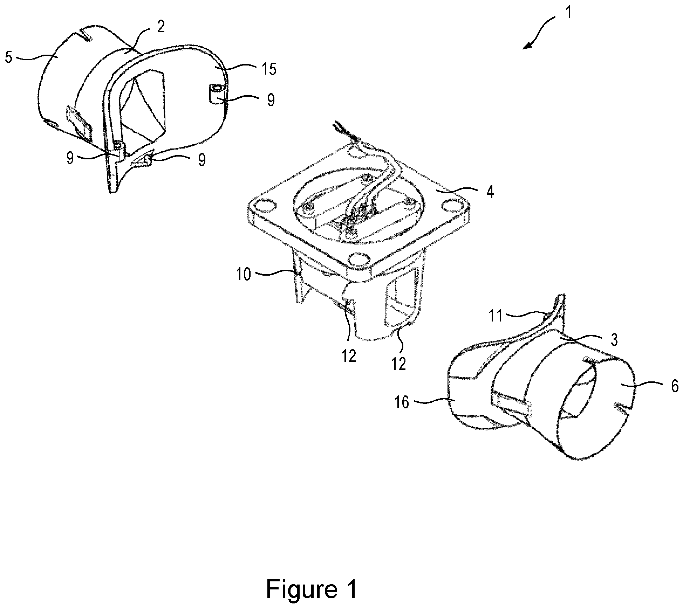

Referring to Figure 1, an exploded perspective view of a multi-part assembly 1 for retrofitting into the body and/or surroundings of a mechanical flow meter includes a first or upstream flow-modifying segment 2, a second or downstream flow-modifying segment 3, and an ultrasonic flow measuring unit 4 (also referred to as an ultrasonic measurement unit). When assembled, the multi-part assembly 1 forms a flow passage through the first flow-modifying segment 2, the ultrasonic flow measurement unit 4 and the second flow-modifying segment 3 between respective distal ends 5, 6 of the first and second flow-modifying segments. The formation of this flow passage within the body of a mechanical flow meter may establish an ultrasonic flow measuring meter suitable for measuring the flow of a fluid (e.g., water, oil, gasoline, natural gas, methane etc.) passing from the distal end 5 of the first segment 2, through to the distal end 6 of the second segment with greater accuracy than if using the ultrasonic flow measuring unit 4 alone, without the flow-modifying segments 2, 3. The first and second segments 2, 3, may also be referred to as inserts.

Using such an assembly, a mechanical flow meter can be converted to an ultrasonic flow meter which can calculate the flow of fluid through the flow passage of the ultrasonic flow measurement unit, for example, by using time-of-flight measurements between first and second ultrasonic transducers (not shown). The first (upstream) flow-modifying segment 2 and the second (downstream) flow-modifying segment 3 are positioned so that fluid flowing through the ultrasonic flow measuring unit 4 has a more uniform speed than if the ultrasonic flow measuring unit 4 was used alone. This can increase the accuracy of flow measurement using the ultrasonic flow measuring unit 4.

The outer body or shell of the of the first and/or second flow-modifying segments 2, 3 may be cylindrical, or substantially cylindrical. For example, between 25% and 75% of the outer body or shell may be cylindrical.

The first segment 2 has at least one connector 9 which can connect to or engage with a corresponding first connector 10 on the ultrasonic flow measuring unit 4. Likewise, the second segment 3 has at least one connector 11 which can connect to or engage with a corresponding second connector 12 on the ultrasonic flow measuring unit 4. The connectors 9, 11 of the first and second segments 2, 3, may be arranged on the respective proximal ends 15, 16. The connector(s) 9, 10, 11, 12 may rigidly link the proximal ends 15, 16 of the segments to the ultrasonic flow measurement unit 4. Note that in Figure 1, due to the perspective view, many of the connectors are not visible. Of the visible connectors, only the left most first segment connector 9 and the left most first ultrasonic flow measuring unit connector connect together.

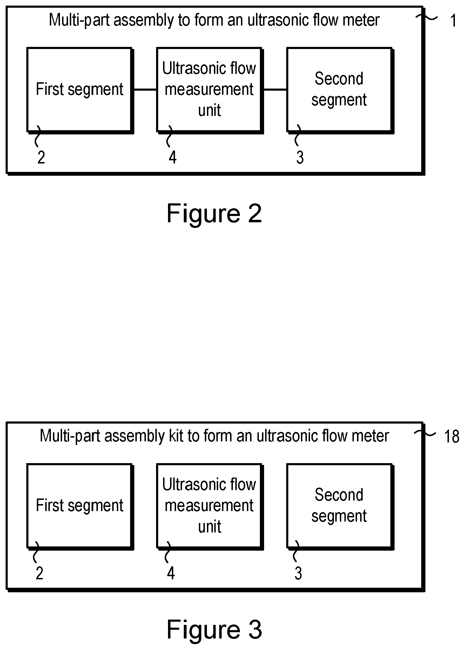

Referring to Figure 2, a system block diagram of the multipart assembly 1 shows the assembly including the first and second segments 2, 3 connected to the ultrasonic flow measuring unit 4. Similarly, referring to Figure 3, a system block diagram of a multi-part assembly kit 18 to form an ultrasonic flow meter includes the first and second segments 2, 3 and the ultrasonic flow measuring unit 4. The kit does not necessarily have the segments 2, 3 connected to the ultrasonic flow measuring unit 4.

Mechanical flow meter

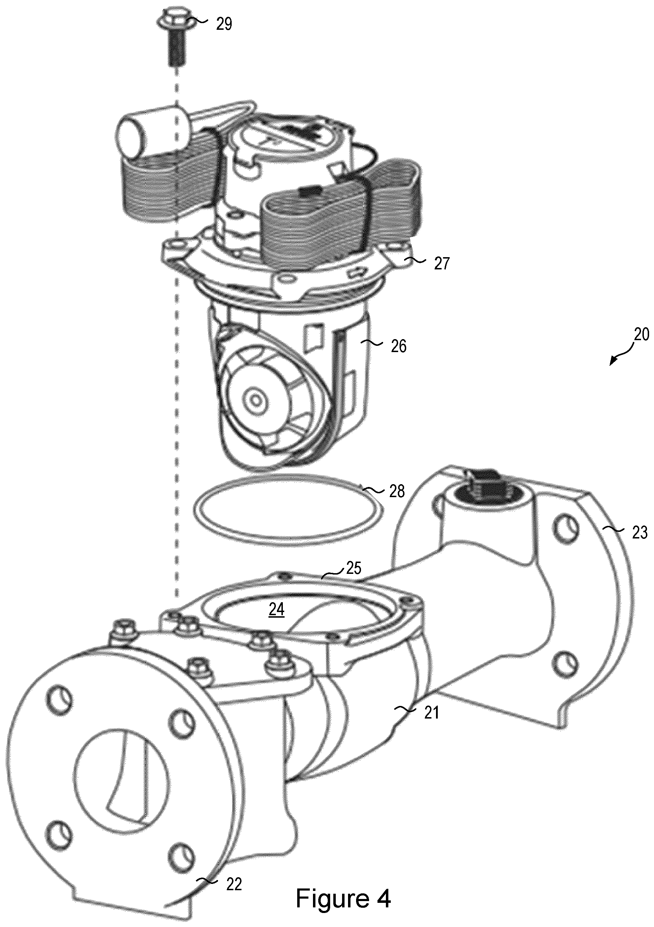

Referring to Figure 4, a perspective exploded view of a mechanical flow meter 20, specifically a Sensus (RTM) Omni (RTM) meter. The mechanical flow meter 20 includes a mechanical flow meter body 21 which can be connected to pipework (not shown) via first and second fixing plates 22, 23. The mechanical flow meter body has an aperture 24 defined by an aperture rim 25 through which the mechanical flow meter measuring chamber 26 can be inserted and removed. The mechanical flow meter chamber 27 includes a chamber cover 27 located at the top of the mechanical flow meter chamber and is configured to engage with the aperture rim 25. A gasket 28, e.g., an O-ring, is provided between the chamber cover 27 and the aperture rim 25 to seal the measuring chamber 26 into the mechanical flow meter body 21. The measuring chamber can be fixed into position using one or more fasteners 29, e.g., a bolt. The width, or greatest dimension, of the access aperture 24 of the mechanical flow meter 20 to be retrofitted may be between 50 mm and 58 mm, for example, 54 mm.

The body of the flow meter may or may not be a casting.

The access aperture 24 may be a non-flow access aperture. That is, the access aperture 24 may be an aperture for accessing the mechanical flow meter chamber 26, and not an aperture intended for fluid to flow though during normal operation.

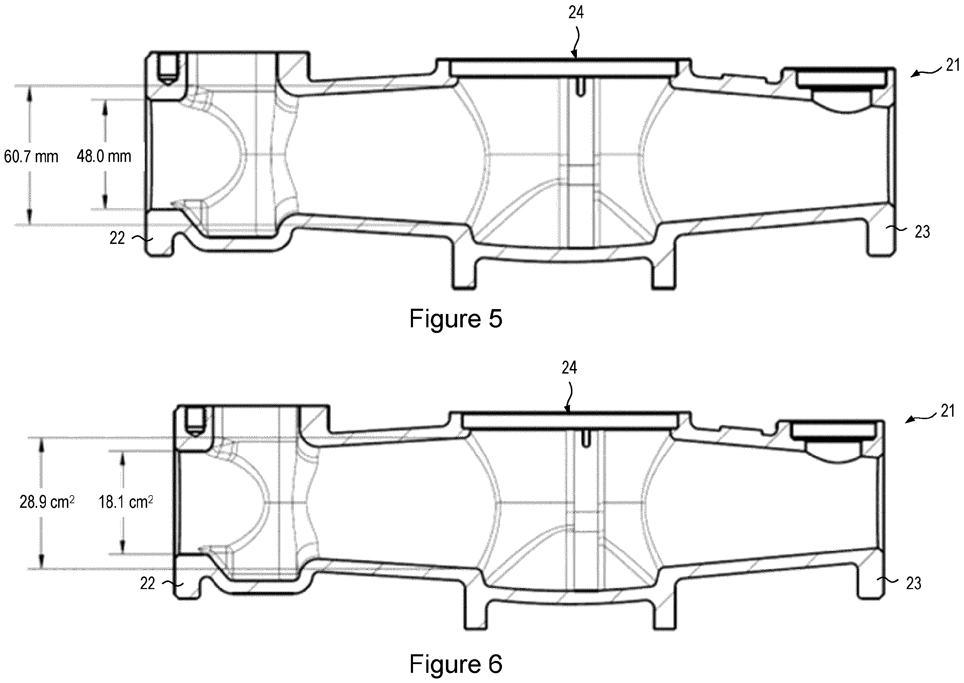

Mechanical flow meters have been manufactured or produced in a variety of different sizes for different purposes, for example, to measure the flow of a fluid in different sized pipes, under different conditions, or measuring the flow of different fluids. Some situations only have a limited space for installing a flowmeter, and therefore smaller mechanical flow meters are required to be able to meet the fluid flow measurement requirements. Referring to Figure 5, a cross section of a first mechanical flow meter body 21 has an internal diameter upstream of the fluid flow of 48 mm, and an internal diameter of 60.7 mm at the entrance to the intended location of the measurement chamber 26 below the aperture 24. Referring to Figure 6, a cross section of the first mechanical flow meter body 21 has an internal cross sectional area upstream of the fluid flow of 18.1 cm$^2$, and an internal cross sectional area of 28.9 cm$^2$ at the entrance to the intended location of the measurement chamber 26 below the aperture 24. Of course, these are merely illustrative examples, and various shapes and sizes of mechanical flow meters exist and can be retrofitted using the multi-part assembly 1 described above.

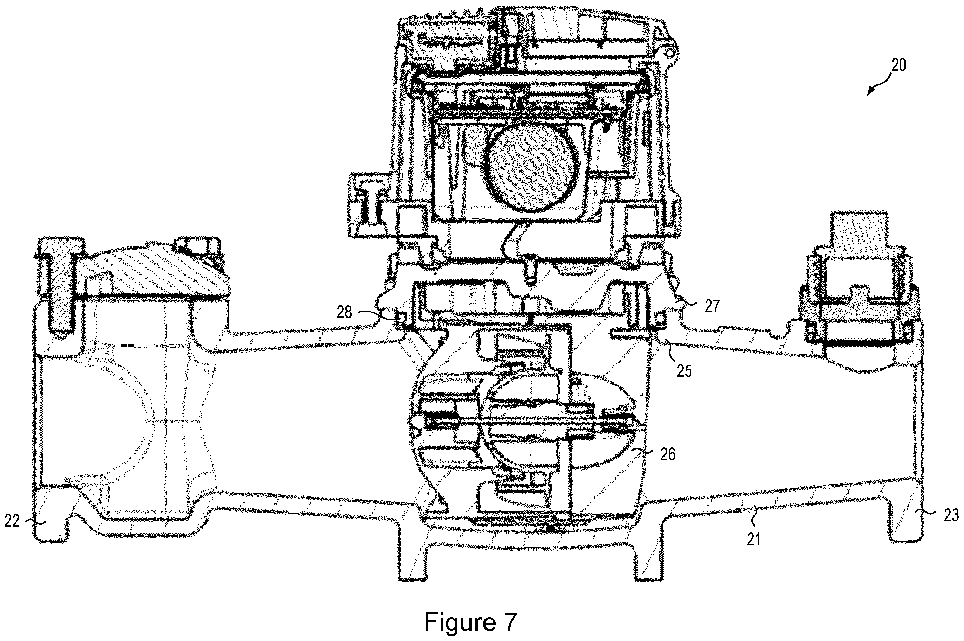

Referring to Figure 7, a cross section of the first mechanical flow meter 20 shows the mechanical flow meter body 21 and the mechanical flowmeter chamber 26 in the position required to measure the flow of the fluid. The first fixing plate 22 may be positioned in an upstream direction and the second fixing plate 23 may be positioned in a downstream direction.

The mechanical flow meter 20 to be retrofitted may be a Woltmann or Woltman mechanical flow meter, a Sensus Woltmann (or Woltman) mechanical flow meter, or a MeiStream mechanical flow meter. The flow meter may be a MeiStream Plus, a MeiStreamRF a MeiStreamRF Plus, an OMNI R$^2$, an OMNI Compound (C$^2$), an OMNI Fire Hydrant (H$^2$) and OMNI Fireline (F$^2$), an OMNI Turbo (T$^2$), an OMNI Verification (V$^2$), an OMNI+ R$^2$, an OMNI+ Compound (C$^2$), an OMNI+ Fire Hydrant (H$^2$) and OMNI+ Fireline (F$^2$), an OMNI+ Turbo (T$^2$), or an OMNI+ Verification (V$^2$), or other suitable mechanical flow meter.

Retrofitting a mechanical flow meter body 21

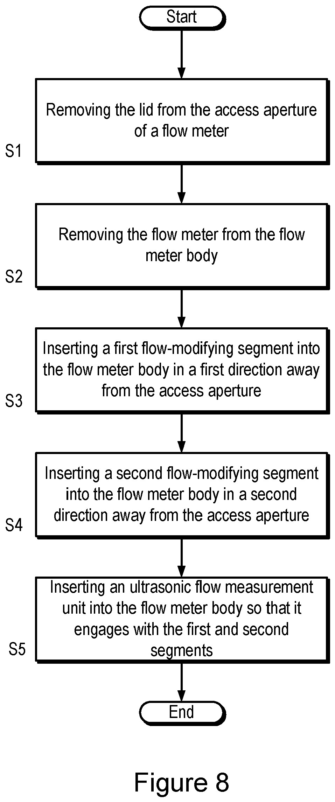

Referring to Figure 8, retrofitting a mechanical flow meter using the multi-part assembly described above first requires the removal of the lid or chamber cover 27 from the access aperture 24 of the mechanical flow meter (step S1). This may require the temporary prevention of fluid flow through the mechanical flow meter body 21, but in some circumstances, flow can continue during the retrofitting process. The mechanical flow meter chamber 26 can then be removed from the mechanical flow meter body 21 via the access aperture 24 (step S2). Next, a first flow-modifying segment or insert 2 can be inserted into the mechanical flow meter body 21 via the access aperture 24 and moved into a position away from the access aperture in a first direction, for example, towards the first fixing plate 22 (step S3). The first flow modifying segment 2 may be inserted in an upstream direction, or what would be an upstream direction when the flow meter is in operation. A second flow-modifying segment or insert 3 can then be inserted into the mechanical flow meter body 21 via the access aperture 24 and moved into a position away from the access aperture in a second direction, for example, towards the second fixing plate 23 (step S4). Steps S3 and S4 can be performed the other way round, that is, performing step 4, and then step 3. The second flow modifying segment 3 may be inserted in a downstream direction, or what would be a downstream direction when the flow meter is in operation. Finally, the ultrasonic flow measuring unit 4 is then inserted through the access aperture 24 and engages with and connects to the first and second segments 2, 3 (step S5) forming a flow passage from the distal end of the first segment 2, through the ultrasonic flow measuring unit 4 and to the distal end of the second segment 3. This step also comprises engaging the connectors 10, 12 of the ultrasonic flow measuring unit 4, with the corresponding connectors 9, 11 of the first and second segments 2, 3. The first and second flow-modifying segments 2, 3 may act as additional internal respective first and second linings for the existing flow meter 20.

The mechanical flow meter 20 can therefore be retrofitted by inserting the first and second flow-modifying segments and the ultrasonic flow measurement unit through a non-flow access aperture of the mechanical flow meter, with or without detaching the meter from the surrounding pipework. Therefore, a mechanical flow meter can be upgraded or updated to an ultrasonic flow meter without disconnecting it from the connected pipes. Thus, the life of an existing (mechanical) flow meter can be extended, reducing waste, costs, and downtime where no flow can occur, and no measurements be recorded.

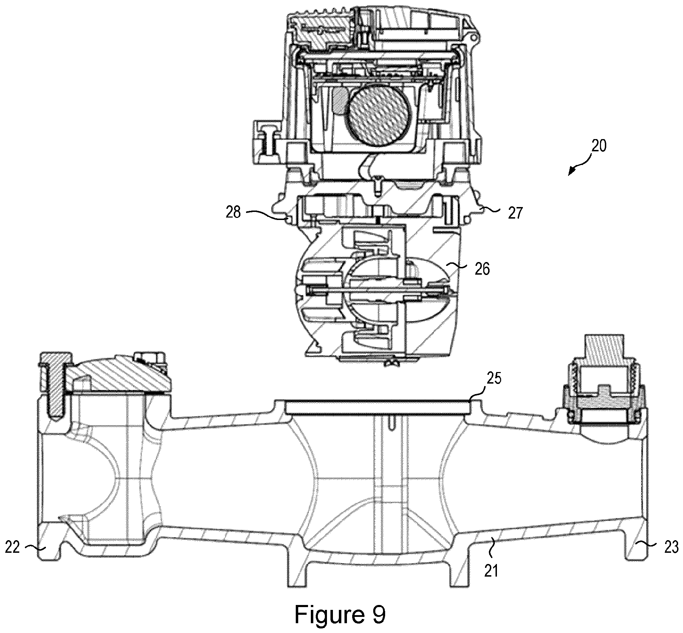

Referring to Figure 9, a cross section showing parts of steps S1 and S2 of Figure 8 where the mechanical flow meter chamber 26 is removed from the mechanical flow meter body 21 through the aperture 24 leaving the mechanical flow meter body 21 ready to receive the components 2, 3, 4 of the multi-part assembly 1.

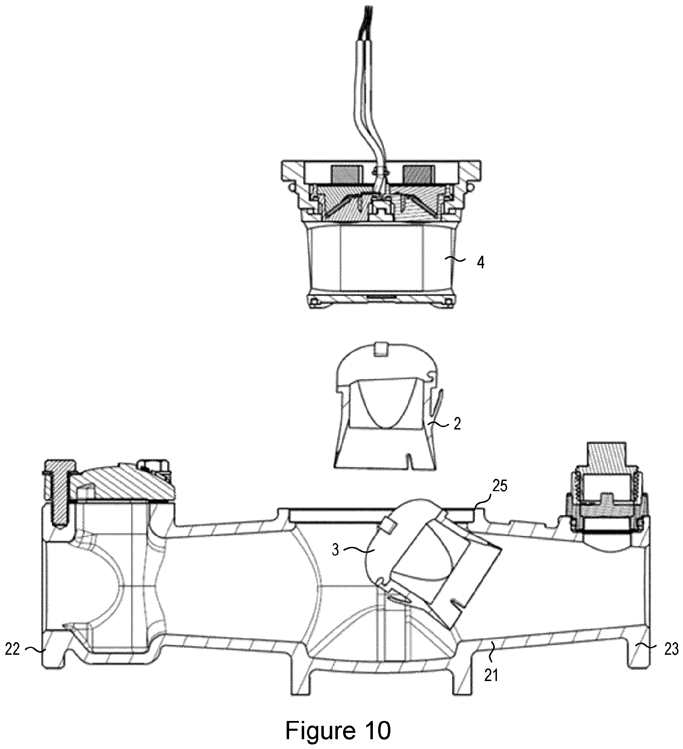

Referring to Figure 10, a cross section of part of step S4 where the second segment 3 is being inserted into the downstream section of the mechanical flow meter body 21. The first segment 2 is arranged above the aperture 24 of the flow meter body ready for insertion into the upstream direction of the mechanical flow meter body 21, with the ultrasonic flow measuring unit 4 ready to follow these two segments 2, 3 through the aperture 24 and to connect with the two segments 2, 3.

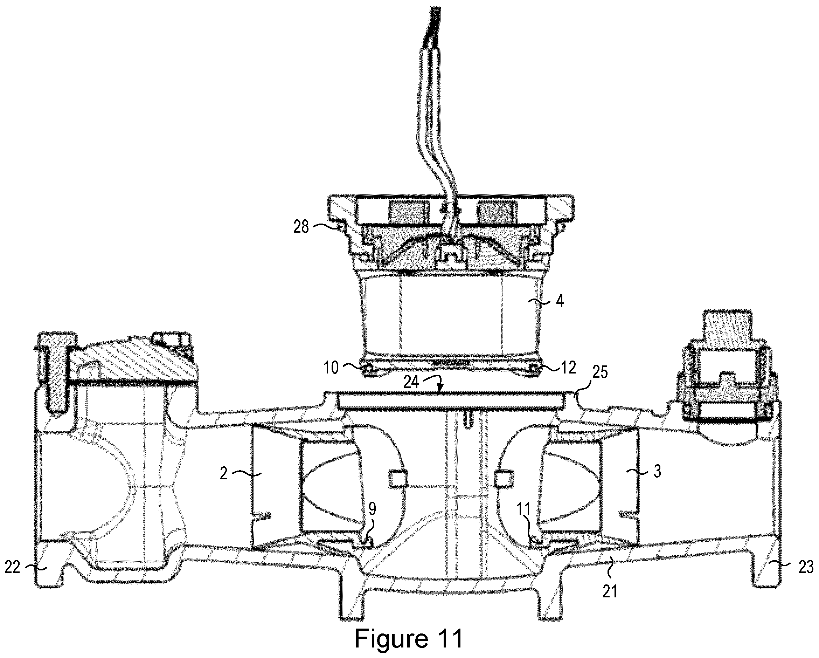

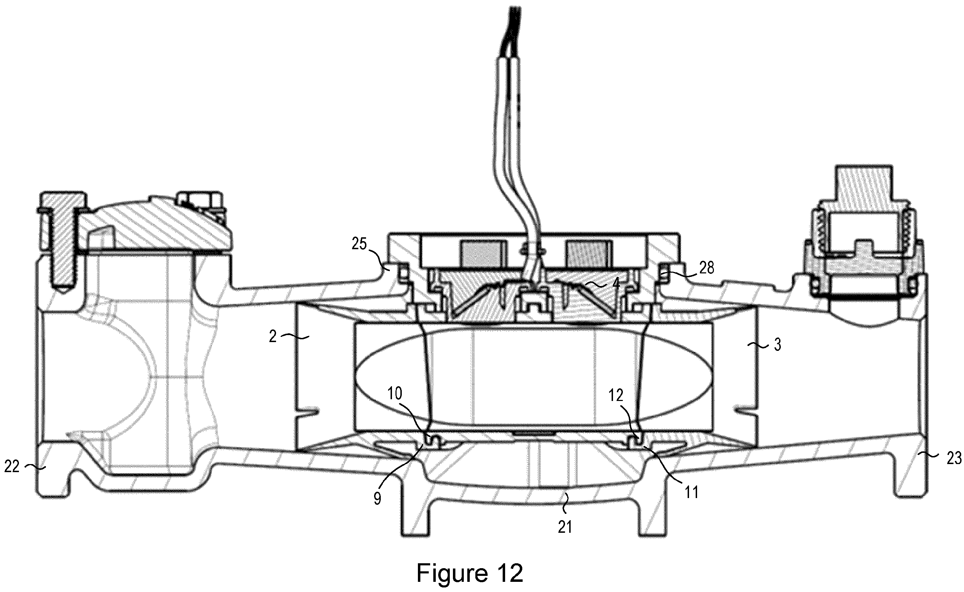

Referring to Figure 11, a cross section of the mechanical flow meter body 21 shows the first and second segments 2, 3 in their respective flow-modifying positions, with a cross section of the ultrasonic flow modifying unit 4 above the aperture 24 ready to be inserted through the aperture 24 into the mechanical flow meter body 21 and to engage the first and second connectors 10, 12, with the respective connectors 9, 11 of the first and second segments 2, 3. Referring to Figure 12, a cross section shows the ultrasonic flow measuring unit 4 connected to the first and second segments 2, 3, with the first and second connectors 10, 12 engaged with and connected to the respective connectors 9, 11, of the first and second segments. The at least one connector 9 of the first segment 2 fastens or secures the first segment 2 to the ultrasonic flow measuring unit 4 when it engages with the at least one respective connector 10 of the ultrasonic flow measuring unit 4. Likewise, the at least one connector 11 of the second segment 3 fastens or secures the second segment 3 to the ultrasonic flow measuring unit 4 when it engages with the at least one respective connector 12 of the ultrasonic flow measuring unit 4.

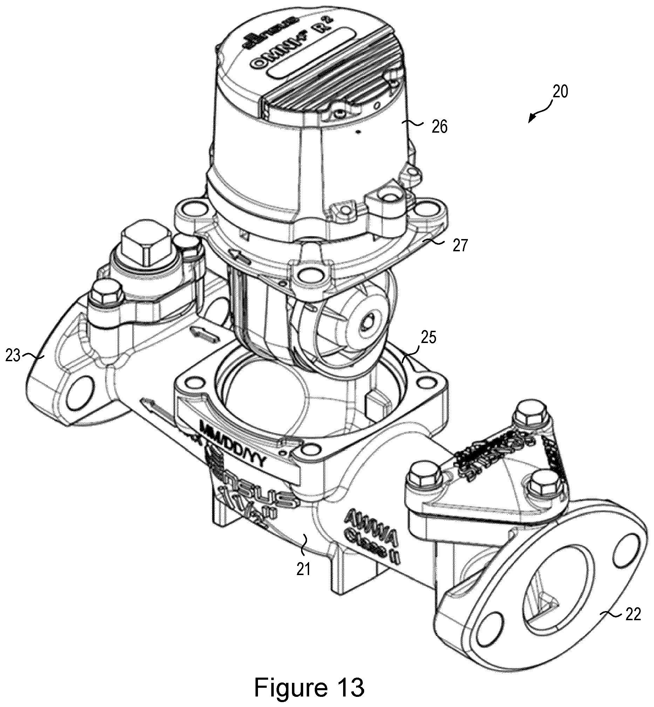

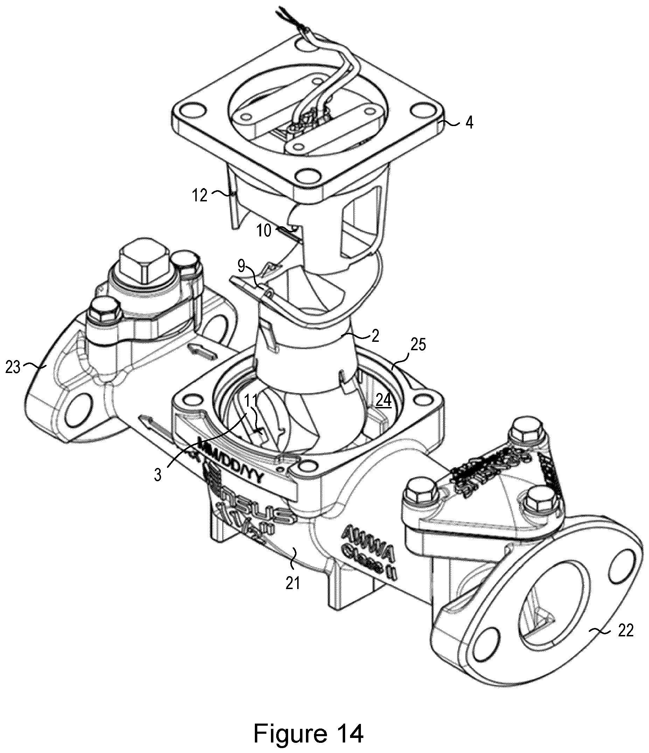

Referring to Figure 13, a perspective view of the mechanical flow meter 20 shows the mechanical flow meter chamber 26 removed from the mechanical flow meter body 21 (end of step S2). Referring to Figure 14, a perspective view of the mechanical flow meter body 21, the first and second segments 2, 3, and the ultrasonic flow measuring unit 4, with the second segment 3 partially inserted into the downstream part of the mechanical flow meter body 21, and the first segment 2 and the ultrasonic flow measuring unit 4 ready to be inserted through the aperture 24.

Ultrasonic flow measuring unit 4

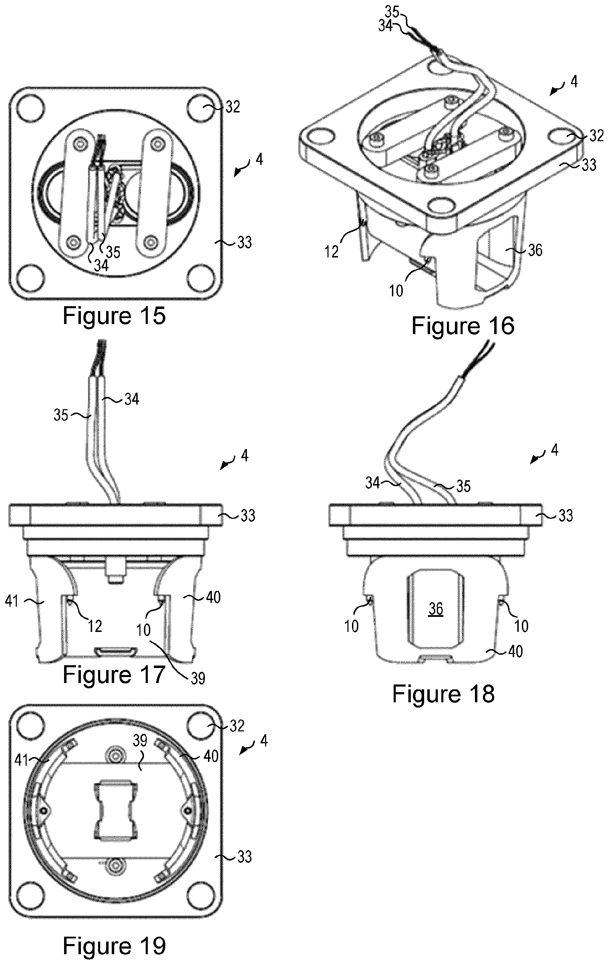

Referring to figure 15, a top view of the ultrasonic flow measuring unit 4 shows four holes 32 used for inserting one or more fasteners (not shown) through the ultrasonic flow measuring unit cover or lid 33 to fasten it to the aperture rim 25. The ultrasonic flow measuring unit cover 33 is generally square, and has similar dimensions to the mechanical flow meter chamber 26 that it is replacing within the mechanical flow meter body 21. First and second wire connectors 34, 35 are attached to the unit 4. The wires 34, 35 are suitable for power to be provided to the unit from a power source (not shown) and/or a signal to be sent to or from the unit 4. Referring to Figure 16, a perspective view of the ultrasonic flow measuring unit 4 shows an opening to the flow passage 36 which passes through the ultrasonic flow measuring unit 4. First and second ultrasonic transducers (not shown) are arranged within the ultrasonic flow measuring unit 4 which can be used to perform flow measurements, for example, and as will be explained in more detail later, using time of flight measurements.

Referring to Figure 17, a first side view of the ultrasonic flow measuring unit 4 with the flow passage 36 running from left to right and obscured by the ultrasonic flow measuring unit wall 39. First and second collars 40, 41 are arranged at and surrounding the first and second ends of the flow passage 36. Each collar 40, 41 extends beyond the flow passage 36 and curves towards the other collar, for example, along a circumference of a circle. The connectors 10, 12 may be arranged on the collar 40, 41, for example, at a point farthest from the flow passage 36. The collars 40, 41 are configured to engage with and abut corresponding collars on the first and second segments 2, 3. Referring to Figure 18, a second side view of the ultrasonic flow measuring unit 4 which is perpendicular to the first side view shows the ultrasonic flow measuring unit flow passage 36 and the first collar 40 comprising first and second first connectors 10. Referring to Figure 19, a bottom view of the ultrasonic flow measuring unit 4 shows some of the same features as in Figures 15 to 18 from underneath the ultrasonic flow measuring unit 4.

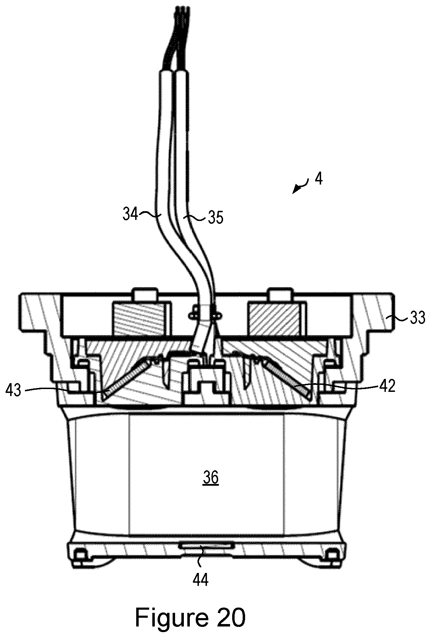

Referring to Figure 20, a cross section of the ultrasonic flow measuring unit 4 shows the position and arrangement of first and second transducers 42, 43, and a reflector 44. The first and second transducers 42, 43 are arranged to send an ultrasonic signal towards the reflector, the reflector 44 is arranged to reflect the ultrasonic signal and direct it to the other transducer, for example, the first transducer 42 sends an ultrasonic signal which is reflected by the reflector 44 towards the second transducer 43, and vice versa. The reflector 44 may be a metal sheet, or other material suitable for reflecting an ultrasonic wave or pulse, attached to the main body of the measurement unit.

First flow-modifying segment 2

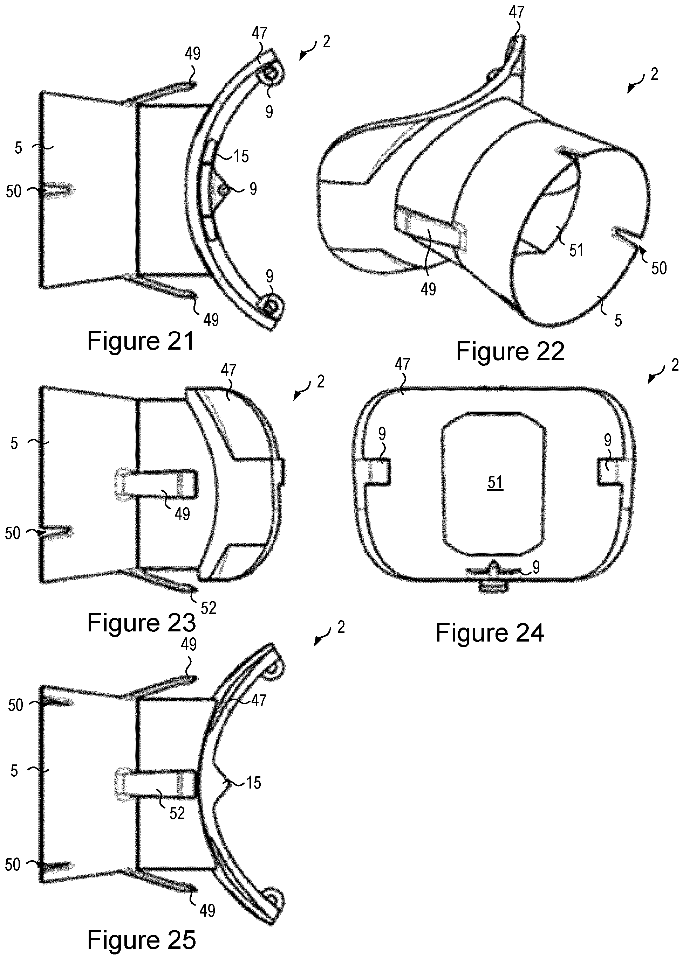

Referring to Figure 21, a top view of the first flow modifying (or flow conditioning) segment 2 shows the distal end 5 of the first segment. The first segment 2 has a first segment collar 47 arranged the opposite, proximal, end 15 of the first segment 2. The first segment 2 may increase in exterior circumference or perimeter towards the distal end 5, for example, from the middle (e.g., a point in the middle of a straight line from the distal end 5 to the proximal end 15) of the first segment 2. The collar 47 surrounds the aperture to the flow passage (see Figure 24) at the proximal end 15 and is curved away from the distal end 5. The collar 47 comprises at least one first segment connector 9. The first segment may include at least one positioning member 49 or at least one positioning member receiving section (not shown). The positioning member 49 is connected to the first segment 2 at one end of the member and protrudes out and away from the first segment 2 in the direction of the proximal end 15. The positioning member 49 may be arranged at an angle between 10° and 35° with respect to the external surface of the segment 2, or at an angle between 18° and 26° with respect to the external surface of the segment 2. If there is a positioning member receiving member section, is configured to receive and engage with a positioning member 49 with the same properties as the attached positioning member described above. The positioning member aids the correct positioning of the first segment within the mechanical flow meter body 21. The distal end 5 is compliant or flexible and may allow for achieving a smooth transition from the internal wall of the mechanical flow measuring unit body 21 and the flow passage 51 of the first segment 2. The distal end 5 may have at least one compliant feature 50, for example a notch or a thin flexible wall which can aid achieving the smooth transition between the internal wall of the mechanical flow measuring unit body 21 and the flow passage of the first segment 2. The notch may be, for example, a U-shaped or a V-shaped cut from the distal 5 end towards the proximal end 15 of the segment 2.

Referring to Figure 22, a perspective view of the first segment 2 with the distal end 5 at the front shows the compliant feature 50 (a notch) and the first segment flow passage 51 which runs through the first segment between the distal and proximal ends. Referring Figure 23, a first side view of the first segment 2 shows the distal end, the compliant feature 50, the first positioning member 49, and the collar 47. Additionally, there may be a second positioning member 52 which may have a different stiffness to the first positioning member 49, for example, it may be more stiff or less stiff. The second positioning member 52 is arranged at the bottom of the first segment 2, that is, when inserted into the mechanical flow meter body, the second positing member is arranged farthest away from the aperture 24. Referring to Figure 24, a second side view of the first segment 2 shows the flow passage 51 from the proximal end 15 showing the collar 47 curved towards the viewer and the at least one connector 9. Referring to figure 25, a bottom view of the first segment 2 shows two first positioning members 49 on opposite sides, and a second positioning member 52 arranged in the middle.

The second positioning member 52 may have a greater resilience and/or stiffness in a first plane, defined by the axis through the centre of the flow passage 51 of the first segment and the positioning member 49, than it does in a second plane perpendicular to the first plane. The second positioning member 52 may have a greater flexibility in the first plane than it does in a third plane perpendicular to the first plane and the second plane. The flexibility of the second positioning member 52 may allow for a greater or equal to +/-0.5% change in a width or diameter between the walls of the mechanical flow meter 20 to be retrofitted. Thus, there may be a centrally located positioning member 52 (e.g., second positing member) which may be arranged, for example, on the first segment 2 opposite the access aperture 24 of the flow meter 20 to be retrofitted when inserted into the flow meter 20 which may be less flexible, stiffer, or have greater resilience than a first positioning member(s) 49 arranged either side of the flow passage. Having the second positioning member 52 be stiffer, less flexible, have greater resilience than the second and third positioning members may aid with the correct positioning of the first segment 3 with respect to the mechanical flow meter 20 internal walls.

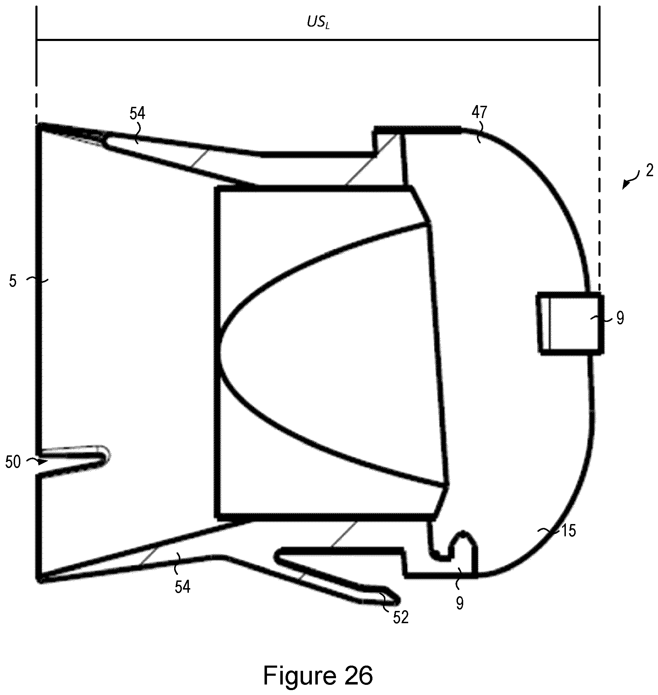

Referring to Figure 26, the first segment 2 may have a length $US_L$ running in the direction of the axis defined by the flow passage 51 of between 84 mm and 90 mm, for example it may be 87 mm. The first segments may be longer or shorter depending on the type of mechanical flow meter 20 being retrofitted, and the accuracy requirements of the ultrasonic flow meter. A cross section of the first segment 2 shows the first segment wall 54 may taper in thickness towards the distal end 5, that is, the wall 54 may get thinner as it gets closer to the distal end 5. For example, the wall 54 may be of a first thickness between the proximal end 15 and around halfway (e.g., $US_L/2$) between the proximal and distal ends 15, 5, and then reduce in thickness as you travel along the wall 52 towards the distal end 5. The tapering (reduction in thickness) of the wall 54 may start between one quarter (i.e., $US_L/4$) and three quarters (i.e., $3 \times US_L/4$) of the length of the first segment form the proximal end 15. The width of the first segment 2 in a direction perpendicular to the direction of the flow passage 51 may be between 70 mm and 76 mmm for example, it may be 73 mm.

Second flow modifying segment 3

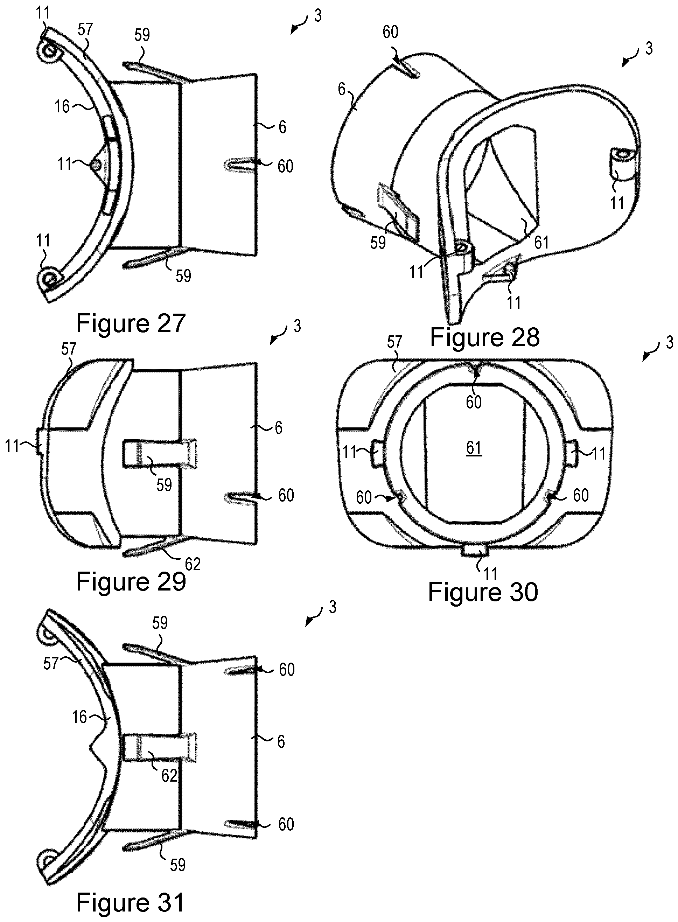

Referring to Figure 27, a top view of the second flow modifying (or flow conditioning) segment 3 shows the distal end 6 of the second segment. The first segment 2 has a first segment collar 57 arranged the opposite, proximal, end 16 of the second segment 3. The second segment 3 may increase in exterior circumference or perimeter towards the distal end 6, for example, from the middle or centre of the first segment 3, (e.g., from a point in the middle of a straight line from the distal end 5 to the proximal end 15). The collar 57 surrounds the aperture to the flow passage (see Figure 28) at the proximal end 16 and is curved away from the distal end 6. The collar 57 comprises at least one second segment connector 11. The second segment may include at least one second segment positioning member 59 or at least one positioning member receiving section (not shown). The positioning member 59 is connected to the second segment 3 at one end of the member and protrudes out and away from the second segment 3 in the direction of the proximal end 16. The positioning member 59 may be arranged at an angle between 10° and 35° with respect to the external surface of the segment 3, or at an angle between 18° and 26° with respect to the external surface of the segment 3. If there is a positioning member receiving member section, is configured to receive and engage with a positioning member 59 with the same properties as the attached positioning member described above. The positioning member aids the correct positioning of the first segment within the mechanical flow meter body 21. The distal end 6 is compliant or flexible and may allow for achieving a smooth transition from the internal wall of the mechanical flow measuring unit body 21 and the flow passage 61 of the second segment 3. The distal end 6 may have at least one compliant feature 60, for example a notch or a thin flexible wall which can aid achieving the smooth transition between the internal wall of the mechanical flow measuring unit body 21 and the flow passage of the second segment 3. The notch may be, for example, a U-shaped or a V-shaped cut from the distal 6 end towards the proximal end 16 of the segment 3.

Referring to Figure 28, a perspective view of the second segment 3 with the proximal end 15 at the front shows the compliant feature 60 (a notch) and the second segment flow passage 61 which runs through the first segment between the distal and proximal ends 6, 16. Referring Figure 29, a first side view of the second segment 3 shows the distal end 6, the compliant feature 60, the first positioning member 59, and the collar 57. Additionally, there may be a second positioning member 62 which may have a different stiffness to the first positioning member 59, for example, it may be more stiff or less stiff. The second segment second positioning member 62 is arranged at the bottom of the second segment 3, that is, when inserted into the mechanical flow meter body, the second positing member is arranged farthest away from the aperture 24. Referring to Figure 30, a second side view of the second segment 3 shows the flow passage 61 viewed from the distal end 6 showing the collar 57 curved away from the viewer and the at least one connector 11. Referring to figure 31, a bottom view of the second segment 3 shows two first positioning members 59 on opposite sides, and a second positioning member 62 arranged in the middle.

The second positioning member 62 of the second segment may have the same properties as the second positioning member 62 of the first segment 2.

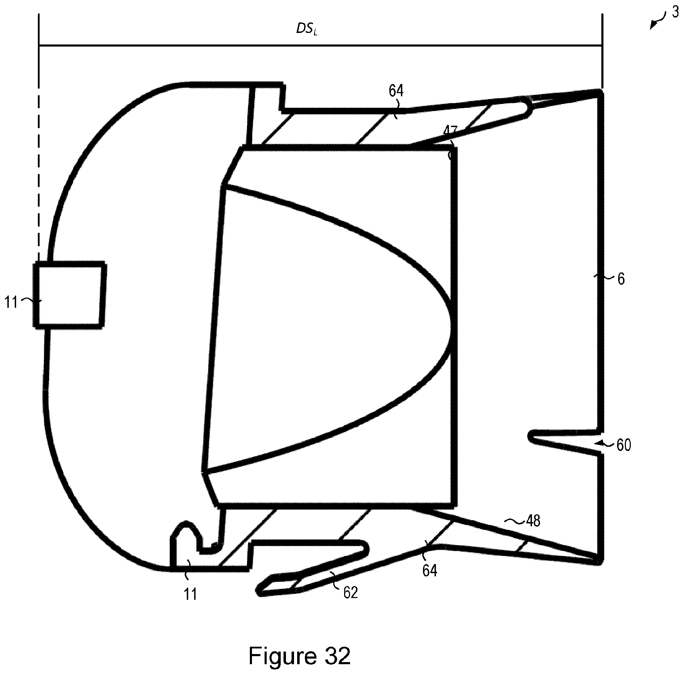

Referring to Figure 32, the second segment 3 may have a length $DS_L$ running in the direction of the axis defined by the flow passage 61 of between 60 mm and 66 mm, for example it may be 63 mm. The second segments 3 may be longer or shorter depending on the type of mechanical flow meter 20 being retrofitted, and the accuracy requirements of the ultrasonic flow meter. A cross section of the second segment 3 shows the second segment wall 64 may taper in thickness towards the distal end 6, that is, the wall 64 may get thinner as it gets closer to the distal end 6. For example, the wall 64 may be of a first thickness between the proximal end 16 and around halfway (e.g., $DS_L/2$) between the proximal and distal ends 16, 6, and then reduce in thickness as you travel along the wall 62 towards the distal end 6. The tapering (reduction in thickness) of the wall 64 may start between one quarter (i.e., $DS_L/4$) and three quarters (i.e., $3 \times DS_L/4$) of the length of the first segment form the proximal end 16. The width of the second segment 3 in a direction perpendicular to the direction of the flow passage 61 may be between 75 mm and 81 mmm for example, it may be 78 mm.

The first and second segment collars 47, 57 at the proximal ends 15, 16 and surrounding the aperture to the first segment flow passage 51 at the proximal end 15 may be arranged to be perpendicular to the axis defined by the centre of the flow passages 51, 61 of the first and second segments 2, 3. When the first and second segments 2, 3 are connected to the ultrasonic flow measuring unit 4, the first segment collar 51 may be flush to the first collar 40 ultrasonic flow measuring unit 4, and the second segment collar 61 may be flush to the second collar 41 of the ultrasonic flow measuring unit 4.

The collars 47, 57 of the first and second segments 2, 3 may be curved away from the proximal ends 15, 16, and the first and second collars 40, 41 of the ultrasonic flow measurement unit maybe curved towards the centre of the ultrasonic flow measurement unit 4.

If the first and/or second connector 9, 11 of the respective first or second segment 2, 3 is a plug, the corresponding first and/or second connector 10, 12 on the ultrasonic measurement unit 4 maybe a socket. If the first and/or second connector 9, 11 of the respective first or second segment 2, 3 is a socket, the corresponding first and/or second connector 10, 12 on the ultrasonic measurement unit 4 may be a plug.

The first and/or second connector 9, 11 of the respective first or second segment 2, 3 may be a hook, and the first and/or second connector 10, 12 on the ultrasonic measurement unit 4 may be a corresponding interconnecting hook configured to connect with the hook of the first or second segment 2, 3. The connectors 9, 10, 11, 12 may be secured with a pin to hold them in place and increase the security and stability of the flow passage 36, 51, 61.

When the first and second connectors 9, 11 of the respective first and second segments 2, 3 are connected to their respective first and second connectors 10, 12 of the ultrasonic measurement unit 4, the first segment 2, ultrasonic flow measurement unit 4, and the second segment 3 may be aligned to form a flow passage.

The ultrasonic flow measuring unit 4 may be connected to a lid which is configured to seal the first and second segments 2, 3, and the ultrasonic measurement unit 4 into the flow meter 20 to be retrofitted. Once the ultrasonic measurement unit 4 is connected to the first and second segments 2, 3, and all three parts may be sealed into the flow meter 20 to be retrofitted, the ultrasonic flow measurement unit 4 is rigidly fixed in position.

The cross section of the flow passage 36 at the centre of the ultrasonic flow measurement unit 4 may be any suitable shape, for example, it may be rectangular or rounded rectangular. Rounded rectangular may mean a rectangle with rounded corners. That is, the cross-sectional area has first and second opposite sides of the same length and third and fourth opposite sides of the same length, wherein the first and second sides are longer than the third and fourth sides and the corners where each side joins are rounded. Alternatively, the cross section of the flow at the centre of the ultrasonic flow measurement unit 4 may be circular, oval, or a flattened circle. Flattened circle means a round cross-section with flat sections.

When the ultrasonic flow measuring unit 4 is connected to the first and second segments 2, 3, the length of the assembly 1 is greater or equal to three times the internal diameter of the inlet of the flow meter 20 which is to be retrofitted. The length of the assembly 1 when first and/or second segments 2, 3, are connected to the ultrasonic measurement unit 4 may be greater than the widest part of the access aperture 24 of the flow meter 20 to be retrofitted. Thus, the flow can be conditioned more than a typical or standard top-loaded insert which is placed through the aperture into the centre of the flow meter to be retrofitted. Greater flow conditioning before flow measurement may allow for greater accuracy in flow measurements in the ultrasonic flow measurement unit.

Poka-yoke compliant

The first and second segments 2, 3 may be constructed such that they comply with poka-yoke, that is, when using the poka-yoke construction, the first segment 2, can only be inserted in a first direction away from the mechanical flow meter body aperture 24, and the second segment 3 can only be inserted in a second direction away from the mechanical flow meter body aperture 24.

Where the mechanical flow meter body 21 of the original meter 20 (that is, the one to be retrofitted) is asymmetric, the distal ends 5, 6 of the first and second segments 2, 3 may have different diameters or circumferences and/or the length of the first and second segments 2, 3 may be different, so they may only mate with the mechanical flow meter body 21 when inserted in the correct direction and/or orientation. For example, with such an arrangement, least one of the first or second segments 2, 3 may not fit into the mechanical flow meter body 21 if inserted into the wrong end or in the wrong direction (e.g., upstream instead of downstream) of the mechanical flow meter 20.

Where the mechanical flow meter body 21 of the original meter (that is, the one to be retrofitted) is either asymmetric or symmetric, the positioning member(s) 49, 52 of the first segment 2 may be in a different position to the positioning members 59, 62 of the second segment 3. The difference between the arrangements of the positioning members 49, 52, 59, 62 of the first and second segments 2, 3 may ensure that the first or second segment 2, 3 cannot be inserted into the incorrect part of the mechanical flow meter body 21, thus, an installer of the multi-part assembly 1 can only insert the parts into the intended end or direction of the mechanical flow meter body 21.

Compliant distal ends 5, 6

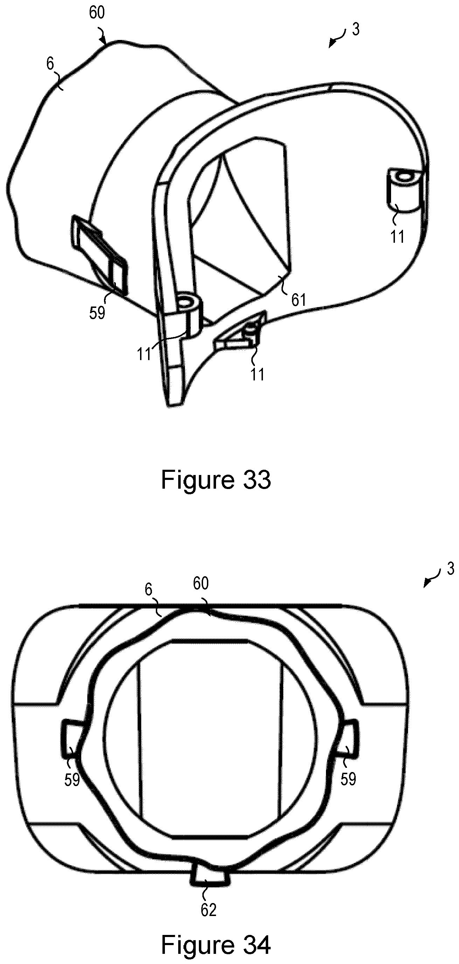

Referring to Figures 33 and 34, a second, down stream flow-modifying segment 3 may have a different compliant feature 60, rather than a notch as shown in the first example, the compliant feature 60 is a deformable wall 64 illustrated by it having the ability to crinkle which may allow it to smoothly connect with the internal mechanical flow meter body, which may in turn allow for a smooth transition from the internal mechanical flow meter body to the flow passage 61, which may decrease turbulence in the flow passage, and increase the accuracy of the ultrasonic flow meter. The first flow-modifying segment 2 may have the same compliant features 50 as this second example, achieving the same effect in the same way. The distal ends 5, 6 of one or both of the segments 2, 3 may be thinner, or made from a different, more compliant material than the rest of the segment 2, 3.

The compliance of the distal ends 5, 6 of the first and second segments 2, 3 may allow the distal ends 5, 6 of the segments 2, 3 to sit flush with the internal wall of mechanical flow meter body 21. For example, regardless of small part-to-part variation in the original body size and surface irregularities of the mechanical flow meter body 21, the compliant distal ends 5, 6, can adapt or be moulded to the internal surface to ensure a smooth transition from mechanical flow meter internal body to the flow passage 51 of the first segment 2 and from the flow passage of the second segment to the internal surface of the mechanical flow meter body 21.

The first and second segments 2, 3 and the ultrasonic flow measuring unit 4 may consist of or comprise plastic. The flow meter 20 to be retrofitted may consist of or comprise metal, particularly in the internal walls of the flow meter/flow meter body 21 or the flow meter chamber 26. The distal ends 5, 6 may form a lip seal from the distal end 5, 6 to the internal walls of the flow meter body 21 to be retrofitted.

The proximal ends 15, 16 of the first and/or second segments 2, 3 may be less compliant than the distal ends 5, 6. The proximal ends 15, 16 may be more ridged than the distal ends 5, 6, which may aid with the connection of the first and second segments 2, 3 to the ultrasonic flow measuring unit 4. The distal ends 5, 6 may allow a greater than or equal to 1% reduction in the cross-sectional area of the first or second segment flow passage 51, 61. For example, when fitted within the mechanical flow meter body 21, the distal end 5, 6 may be compliant enough to reduce the cross-sectional area of the flow passage 51, 61 (that is, in a plane perpendicular to the axis in line within the direction of the fluid flow through the flow passage) by greater than or equal to 1%.

Alternative positioning members 49, 52, 59, 62 or positioning member receiving sections

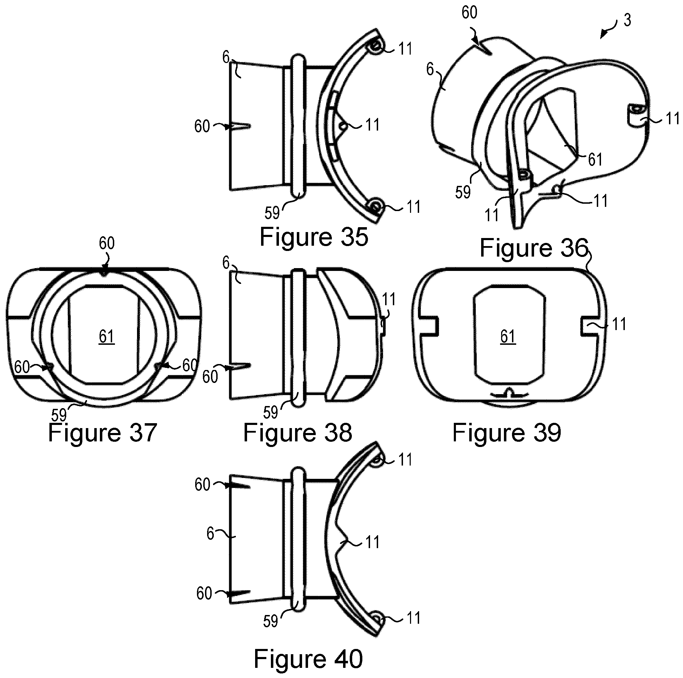

Referring to Figures 35 to 40, the first or second segment positioning members 49, 59 may be a washer, and O-ring, or a gasket. The positioning member 49, 59 may be a spring. The positioning member receiving section in the first or second segment 2, 3. The positioning member 49, 59, may sit within a positioning member receiving portion or section (not shown), e.g., a groove or route. The positioning member receiving section may be configured to receive an O-ring, or a gasket, spring, leaf spring, resilient member, a cradle, or a washer. While a second segment 3 is shown in Figures 35 to 40, the same features may also be used with the first segment.

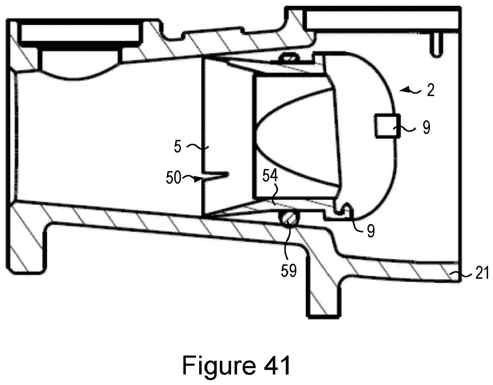

Referring to Figure 41, a cross section of the first segment 2 with a washer, O-ring, or gasket as the positioning member 49 within a cross section of a portion of the mechanical flow meter body 21. When the first segment 2 is in the desired position, the gasket 49 is arranged between the internal wall of the mechanical flow meter body 21 and the wall 54 of the first segment 2. The second segment 3 may have a gasket 59 positioned in a similar way.

The first and second segments 2, 3 may be sprung to push them in the direction of the access aperture 24 of the mechanical flow meter 20. The spring force may come from the shape and material of the segment 2, 3, or it may come from one of the positioning members 49, 52, 59, 62. When inserting the ultrasonic flow measuring unit 4, it may push the first and second segments 2, 3 away from the access aperture 24 of the mechanical flow meter 20. Thus, the act of inserting the ultrasonic flow measuring unit 4 may move the three parts 2, 3, 4 into the correct position for measuring the flow using the ultrasonic flow measuring unit 4.

Flow profiles

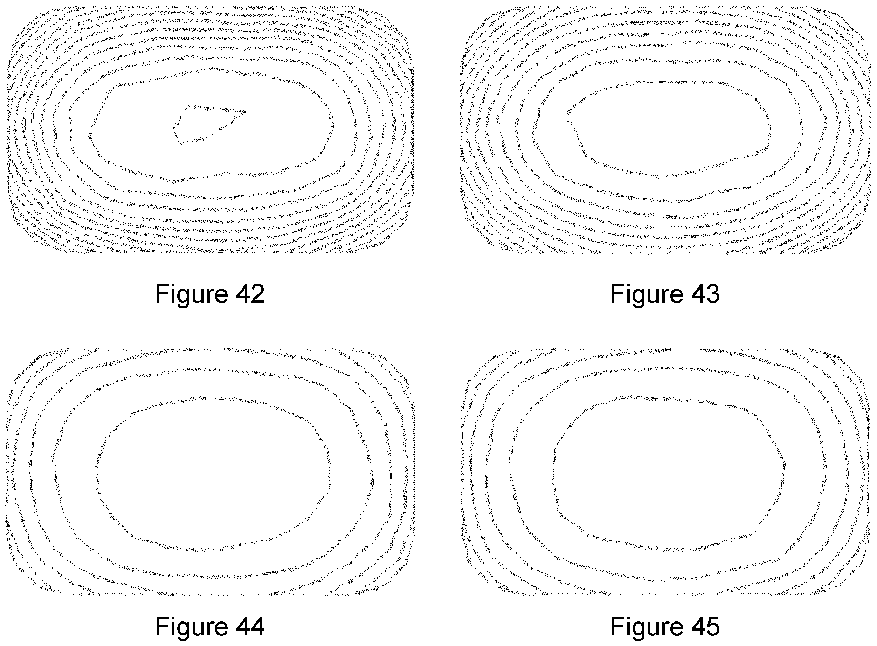

Referring to Figures 42 to 45, the flow speed of fluid moving through the complete flow passage (the first segment flow passage 51 connected to the ultrasonic flow measuring unit flow passage 36, connected to the second segment flow passage 61) may provide a more uniform flow through the ultrasonic flow measuring unit flow passage 36, where the fluid flow is measured using a time-of-flight ultrasonic flow measurement compared to using the flow passage 36 of the ultrasonic flow measuring unit alone. More uniform flow can increase the accuracy of a flow measurement.

Referring to Figure 42, flow velocity contours at 0.1 m/s intervals in a cross-section taken perpendicular to the flow direction 10 mm upstream of the centre of the ultrasonic flow measuring unit 4 when installed in a mechanical flow meter body 21 without conditioning generated by a computational fluid dynamic model at nominal flow speed, showing a large difference in flow speed between the centre and outside of the flow. Referring to Figure 43, flow velocity contours at 0.1 m/s intervals in a cross-section taken perpendicular to the flow direction 10 mm downstream of the centre of the ultrasonic flow measuring unit 4 when installed in a mechanical flow meter body 21 without conditioning generated by a computational fluid dynamic model at nominal flow speed, again showing a large difference in flow speed between the centre and outside of the flow. The difference in the flow velocity contour profiles up and downstream of the centre of the ultrasonic flow measuring unit flow passage 36 indicate that the flow profile has not stabilised, which can result in inaccurate fluid flow measurements.

Referring to Figure 44, flow velocity contours at 0.1 m/s intervals in a cross-section taken perpendicular to the flow direction 10 mm upstream of the centre of the ultrasonic flow measuring unit 4 when installed in a mechanical flow meter body 21 when it is connected to both the first and second flow-modifying segments 2, 3 generated by a computational fluid dynamic model at nominal flow speed, showing a relatively small difference in flow speed between the centre and outside of the flow compared to where no flow-modifying segments are used. Referring to Figure 45, flow velocity contours at 0.1 m/s intervals in a cross-section taken perpendicular to the flow direction 10 mm downstream of the centre of the ultrasonic flow measuring unit 4 when installed in a mechanical flow meter body 21 again when it is connected to both the first and second flow-modifying segments 2, 3 generated by a computational fluid dynamic model at nominal flow speed. The downstream velocity contours again show a relatively small difference in flow speed between the centre and outside of the flow. The difference in the flow velocity contour profiles up and downstream of the centre of the ultrasonic flow measuring unit flow passage 36 indicate that the flow profile is more stable than when no flow-modifying segments 2, 3, are used, which can result in more accurate fluid flow measurements.

The first flow-modifying segment 2 ensures a smooth transition of the fluid from the mechanical flow meter body 21 to the ultrasonic flow measuring unit flow passage 36. This can be achieved by flow passage decreasing in cross-sectional area by greater or equal to 25% between the distal end of the first segment 2 and the centre of the ultrasonic flow measurement unit passage 36. Alternatively, or additionally, the flow passage may increase in cross-sectional area by greater or equal to 33% between the centre of the ultrasonic flow measurement unit flow passage 36 and the distal end of the second segment 3.

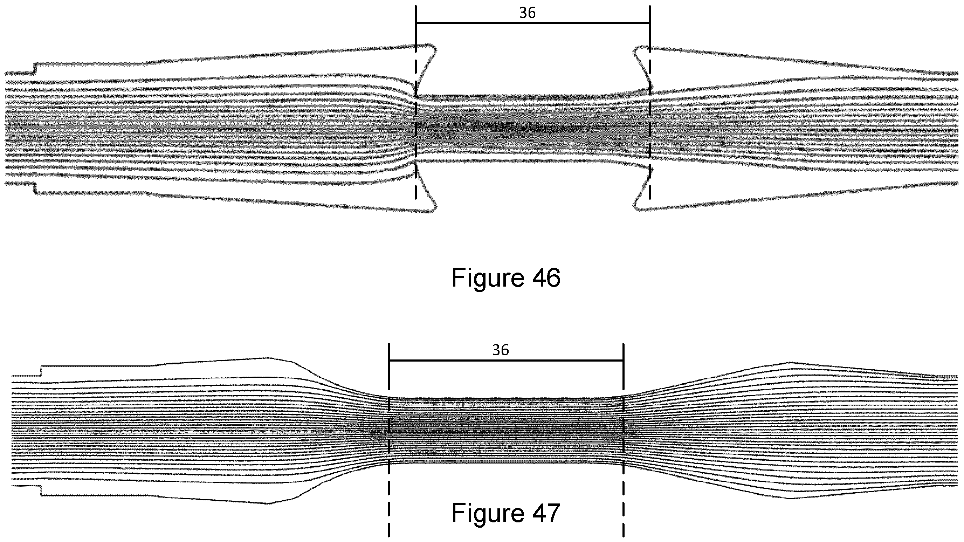

Referring to Figure 46, streamlines illustrating flow in a computational fluid dynamic model of the nominal flow rate through an ultrasonic flow measuring unit 4 in a mechanical meter body 21 without the first and second flow-modifying segments 2, 3 show a higher velocity of fluid flow at the centre of the flow passage 36 than near the flow passage wall 39. Referring to Figure 47, streamlines illustrating flow in a computational fluid dynamic model of the nominal flow rate through an ultrasonic flow measuring unit 4 in a mechanical meter body 21 when connected to both first and second flow-modifying segments 2, 3 shows a relatively more even velocity throughout the cross section of the flow passage 36 of the ultrasonic flow measuring unit 4.

Ultrasonic flow measuring unit 4 transducer 42, 43 arrangement and system

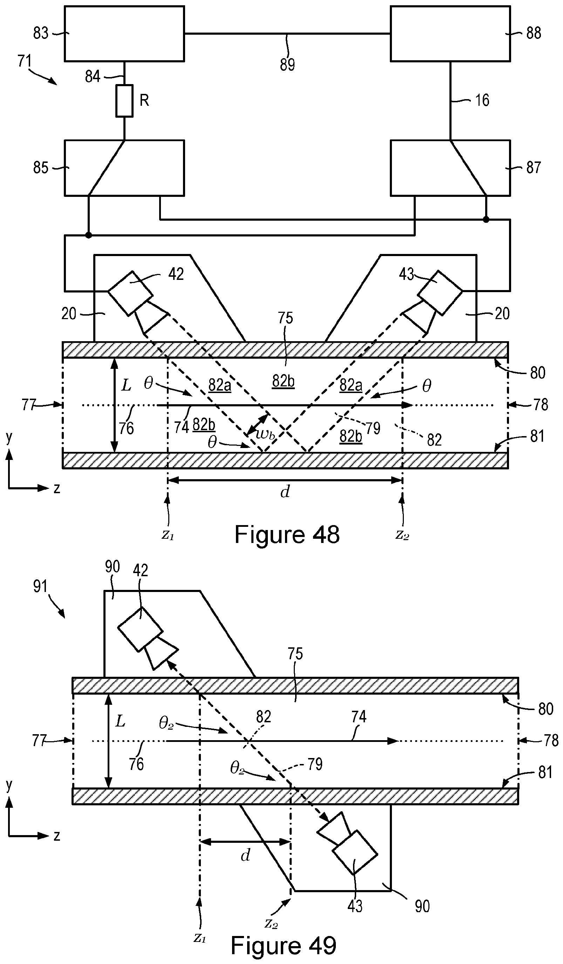

Referring to Figure 48, the ultrasonic flow measurement unit 4 may comprise first and second acoustic transducers. The shape and/or size of the cross section of the flow passage may be uniform between the first and second transducers.

When the ultrasonic flow measuring unit 4 when connected to the first and second flow modifying segments 2, 3, it may have a greater or equal to 2% error over a measurement range where the largest flow rate is 500 times greater than the smallest flow rate. It is possible to achieve this low measurement error due to the multi-part assembly nature of the three parts 2, 3, 4, which allows for a longer flow conditioning segment 2 upstream, and a longer flow condition segment 3 downstream of the ultrasonic flow measurement unit than can be achieved using existing assemblies, which may result in more uniform flow at the ultrasonic flow measuring unit. The collars 40, 41, 47, 57 and connectors 9, 10, 11, 12 ensure that the multipart assembly are rigidly held in place with respect to each other and with respect to the mechanical flow meter 20 to be retrofitted, which can also ensure higher measurement accuracy and increased durability.

The ultrasonic flow measuring unit 4 comprises an ultrasonic meter 70 is useful for understanding the present invention. The ultrasonic meter 71 includes a first ultrasonic transducer 42 and a second ultrasonic transducer 43. The first and second ultrasonic transducers 43, 43 are spaced apart along a fluid flow path 74 in the form of a flow conduit 75 which forms the flow passage 36. The flow conduit 75 extends along a first axis 76 (z-axis in the Figure 48 example) between a first opening 77 and a second opening 78. The first and second transducers 42, 43 are configured to define a beam path 79 between the first and second ultrasonic transducers 42, 43 and having a component in a direction parallel to the first axis 76.

In the example shown in Figure 48, the first and second ultrasonic transducers 42, 43 are offset from the fluid flow path 74 formed by the flow conduit 75 and oriented at angles $\pm\theta$ to the first axis 76. Both ultrasonic transducers 42, 43 are arranged spaced apart along the first axis 76 and on a first side 80 of the flow conduit 75. The beam path 79 includes a reflection from a second side 81 of the flow conduit 5, opposed to the first side 80. The flow conduit 75 may include a separate reflector 44 (see Figure 20), or the second side 81 of the flow conduit 75 may be integrally formed to function as a suitable reflector for the beam path 79. The ultrasonic transducers 42, 43 may be piezoelectric transducers, solenoid transducers, and so forth.

The beam path 79 has a finite cross-sectional area, and in general the cross-sectional shape of the beam path 79 will be related to the shapes of the first and second transducers 42, 43. However, an effective area of the beam path 79 will typically represent a fraction of the total transducer 42, 43 area, because the power of the emitted ultrasound may be focussed towards the centre of the transducer 42, 43. The relative sensitivity of a transducer 42, 43 used as a receiver is similarly greater towards the centre. Typically, the emitted power/sensitivity varies continuously across a face of a transducer 42, 43. Beam path 79 effective width $w_b$ (or other appropriate dimension) may be defined as the width $w_b$ over which the emitted power/sensitivity remains above a threshold value, for example half of maximum. For example, the transducers 42, 43 may be circular and the beam path 79 may have an effective diameter $w_b$ which is greater than or equal to 1/3 of a diameter of the transducers 42, 43 and less than or equal to said diameter of the transducers 42, 43. In another example the transducers 42, 43 may be square or rectangular, and the beam path 79 may have a square or rectangular cross-section with side length(s) $w_b$ which is (are) greater than or equal to 1/3 of corresponding side lengths of the transducers 42, 43 and less than or equal to said side lengths of the transducers 42, 43. Hereinafter, the effective beam path 79 width $w_b$ (or other dimension) will be referred to rather than the transducer 42, 43 dimensions, because the effective beam path 79 width $w_b$ is more closely related to the volume of fluid which is sampled.

The beam path 79 intersects the flow conduit 75 within a measurement region 82 of the flow conduit. The measurement region 82 is the part of the flow conduit 75 which is sampled by the beam path 79. The measurement region 82 spans between a first position $z_1$ and a second position $z_2$ spaced apart along the first axis 76 and has a length along the flow path 74 of $d = z_2 - z_1$. Portions of the measurement region 82 which intersect the effective width $w_b$ (or other dimension) of one or more beam paths 79 may be referred to hereinafter as sampled volumes 82a of the measurement region 82. Portions of the measurement region which are outside the effective width $w_b$ (or other dimension) of any of the beam paths 79 shall be referred to hereinafter as non-sampled volumes 82b of the measurement region 82. As discussed hereinafter, non-sampled volumes 82b of the measurement region 82 do not contribute to determining a calculated flow speed $u$.

The flow conduit 75 typically has a rectangular or rounded rectangular cross-section in a plane perpendicular to the first axis 76, but may have other shapes such as square, circular, elliptical and so forth. In ultrasonic meter 71, the flow conduit 75 is rectangular with a width $W$ (not shown) shorter than its length $L$. In other examples, the flow conduit 75 may take the form of a cylindrical pipe with a diameter $D$ (not shown). The flow path 74 in Figure 48 illustrates a fluid flow path 84 from the first opening 77 to the second opening 78. In other examples, the flow path 74 may be directed from the second opening 78 to the first opening 77.

The ultrasonic meter 71 also includes a controller 83, which is configured to drive the first and second ultrasonic transducers 42, 43 alternately. In order to make a measurement of flow rate, the controller 83 may drive the first ultrasonic transducer 42 and measure a first time-of-flight $t_1$ based on reception of the signal at the second ultrasonic transducer 43. The controller 83 then measures a second time of flight $t_2$ by driving the second ultrasonic transducer 43 and receiving the signal at the first ultrasonic transducer 42. If the fluid in the flow conduit 75, which may be a gas or a liquid, is moving from the first opening 77 towards the second opening 78 with a velocity, $u$, which is typically substantially directed along the first axis 76 then the total velocity of the sound $v_1$ when measuring the first time of flight $t_1$ will be:

$$v_1 = c + u$$

$$(1)$$

In which $c$ is the velocity of sound in the fluid if the fluid was stationary. Similarly, the total velocity $v_1$ when measuring the second time of flight $t_2$ will be:

$$v_2 = c - u$$

$$(2)$$

The transit times between the first ultrasonic transducer 42 and the measurement region 82 and between the second ultrasonic transducer 43 and the measurement region 82 are constant, and consequently the difference $\Delta t = t_2 - t_1$ depends on the average velocity $u$ in the flow conduit 75. In this way, the controller 83 may determine the average speed $u$ in the direction of the first axis 76 in the flow conduit 75, and hence estimate a flow rate by assuming the flow is all parallel to the first axis 76. In practice, the ultrasonic meter 71 may be calibrated using at least one, and preferably more, known flow rates of fluid passing through the flow conduit 75.

However, it should be noted that the calculated flow speed $u$ is an average across the fluid which passes through the beam path 79. Any fluid which does not pass through the beam path 79 does not contribute to the measurement of the average speed $u$. In other words, fluid passing through at least one sampled volume 82a will contribute to the measurement of the average speed $u$, whereas fluid which only passes through non-sampled volumes 82b does not contribute to the measurement of the average speed $u$.

The controller 83 outputs a drive signal 84 to a transmitting ultrasonic transducer 42, 43 via an impedance matching resistor R and a first switch or multiplexer 85. The first switch 85 may be controlled to supply the drive signal 84 to either the first ultrasonic transducer 42 or the second ultrasonic transducer 43. Whichever ultrasonic transducer 42, 43 receives the drive signal 85 is the transmitting ultrasonic transducer for a measurement. The drive signal 85 may include a pulsed or square waveform having variable frequency, duty cycle and so forth.

Whichever ultrasonic transducer 42, 43 does not receive the drive signal 84 is the receiving ultrasonic transducer for a measurement. The receiving ultrasonic transducer 42, 43 detects an ultrasound signal from the transmitting ultrasonic transducer 42, 43, and converts it into a received electrical signal 86. The received signal 86 is returned to the controller 83 via a second switch or multiplexer 87 and a signal conditioning circuit 88. The first and second switches 85, 87 are configured so that when, for example, the first switch 85 connects to the first ultrasonic transducer 42, the second switch 87 will connect to the second ultrasonic transducer 43, and vice-versa. The signal conditioning circuit 88 may perform amplification and/or filtering of the received signal 86 to generate a conditioned signal 89. The controller 83 is configured to determine the times-of-flight $t_i$, $t_2$. Determination of the first and second times-of-flight may be carried out using a variety of methods. For example, the controller 83 may determine the times-of-flight $t_i$, $t_2$ by comparing the drive signal 84 with the conditioned signal 89. Alternatively, the controller 83 may determine the times-of-flight $t_i$, $t_2$ by measuring

a time between the start of the drive signal 84 and a reference point on the conditioned signal 89 such as, for example, reaching a certain signal amplitude or the $m^{th}$ zero of the oscillation with m a positive integer (i.e., counting $m$ periods).

The controller 83 may be a microcontroller, a microprocessor, or any other suitable data processing apparatus. In some examples, the controller 83, the signal conditioning circuit 18, and the first and second switches 85, 87 may all be integrated into a single integrated circuit in order to simplify the electronics of the ultrasonic meter 71.

The first and second ultrasonic transducers 42, 43 may be external to the flow conduit 45, as shown in Figure 48. In such a configuration, first and second ultrasonic transducers 42, 43 may be connected to the flow conduit 75 using impedance matching materials 90 to enhance transmission of ultrasound in and/or out of the flow conduit 75. Alternatively, the first and/or second ultrasonic transducers 42, 43 may be embedded within, or integrally formed as part of, a wall defining the flow conduit 45. In other examples, the first and/or second ultrasonic transducers 42 may be located within the flow conduit 45.

Referring also to Figure 49, a second ultrasonic meter 91 useful for understanding the present invention is shown. Only the centroid of the beam path 79 is shown in Figure 49.

The second ultrasonic meter 91 is similar to the first ultrasonic meter 71, except that the second ultrasonic transducer 43 is arranged on the second side 71 of the flow conduit 75, such that the beam path 79 does not include a reflection, and such that $\tan(\theta_2) = L/d.$

As described hereinbefore, ultrasonic meters 71, 91 measure an average fluid speed u which depends only on the fluid which intersects the beam path 79. Any fluid which passes through the measurement region 82 without passing across the beam path 79 at least once (passes only through non-sampled volumes 82b) does not contribute to the measurement. Including a reflection in the beam path 79, as in the first ultrasonic meter 1, may extend the length of the beam path 79 compared to the second ultrasonic meter 91. However, some fluid will still not intersect the beam path 79. Consequently, in the first and second ultrasonic meters 71, 91, only a fraction of the actual fluid flow which passes through sampled volumes 82a is measured.

Conversion of the measured average speed $u$ into a mass flow rate of the fluid relies upon an assumed speed $u$ across the flow conduit 75 and known cross sectional area.

Modifications

It will be appreciated that various modifications may be made to the embodiments hereinbefore described. Such modifications may involve equivalent and other features which are already known in the design, manufacture and use of multi-part assemblies for retrofitting into a passage of a mechanical flow meter and component parts thereof and which may be used instead of or in addition to features already described herein. Features of one embodiment may be replaced or supplemented by features of another embodiment.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

1. A multi-part assembly (1) for retrofitting into a passage of a mechanical flow meter (20) so as to form an ultrasonic flow meter (71), the multi-part assembly comprising:

    an ultrasonic flow measurement unit (4);
    first and second flow-modifying segments (2, 3) arranged either side of the ultrasonic flow measurement unit to form a flow passage through the first flow-modifying segment, the ultrasonic flow measurement unit (4) and the second flow-modifying segment between respective distal ends (5, 6) of the first and second flow-modifying segments, each of the first and second flow-modifying segments having respective proximal ends (15, 16); and
    first and second connectors (9, 11) arranged on the respective proximal ends of the first and second flow-modifying segments configured to connect to respective first and second connectors (10, 12) on the ultrasonic flow measurement unit.

2. The multi-part assembly (1) of claim 1, wherein the flow passage decreases in cross-sectional area by greater or equal to 25% between the distal end (5) of the first segment (2) and the centre of the ultrasonic flow measurement unit (4) and/or the flow passage increases in cross-sectional area by greater or equal to 33% between the centre of the ultrasonic flow measurement unit and the distal end (6) of the second segment (3).

3.  The multi-part assembly (1) of claim 1 or 2, wherein the length of the assembly when first and/or second segments (2, 3) are connected to the ultrasonic measurement unit (4) is greater than the widest part of an access aperture (24) of the flow meter (20) to be retrofitted.

4.  The multi-part assembly (1) of any of claims 1 to 3, wherein the distal ends (5, 6) of the first and/or second segments (2, 3) are compliant for aiding seating of the multi-part assembly in the passage of the flow meter (20).

5.  The multi-part assembly (1) of any of claims 1 to 4, wherein the compliance of the distal ends (5, 6) of the first and second segments (2, 3) allow the distal ends of the segments to sit flush with the internal mechanical flow meter (20) body.

6.  The multi-part assembly (1) of any of claims 1 to 5, wherein the first and/or second segment (2, 3) comprise a positioning member (52, 62) and, optionally, a second and/or third positioning member (49, 59).

7.  The multi-part assembly (1) of claim 6, wherein the positioning member (52, 62) is connected to the segment (2, 3) and directed away from the flow passage.

8.  The multi-part assembly (1) of claims 6 or 7, wherein the positioning member (52, 62) has greater resilience and/or stiffness in a first plane, defined by the axis through the centre of the flow passage of the first or second segment and the positioning member, than it does in a second plane perpendicular to the first plane.

9.  The multi-part assembly (1) of any of claims 1 to 8, wherein the first and second segments (2, 3) are sprung to push them in the direction of the access aperture (24) of the mechanical flow meter (20).

10. The multi-part assembly (1) of any of claims 1 to 9, wherein the first segment (2) and/or second segment (3) comprises a collar (47, 57) surrounding the proximal end (15, 16); and
    the ultrasonic flow measurement unit (4) comprises first, and second collars (40, 41) arranged to engage with the respective collars of the first and second segments.

11. The multi-part assembly (1) of any of claims 1 to 10, wherein, when the first and second connectors (9, 11) of the respective first and second segments (2, 3) are connected to their respective first and second connectors (10, 12) of the ultrasonic measurement unit (4), the first segment, ultrasonic flow measurement unit, and the second segment are aligned to form the flow passage.

12. The multi-part assembly (1) of any of claims 1 to 11, wherein the ultrasonic measurement unit (4) is connected to a lid which is configured to seal the first and second segments (2, 3), and the ultrasonic measurement unit into the flow meter (20) to be retrofitted.

13. The multi-part assembly (1) of claim 12, wherein once the ultrasonic measurement unit (4) is connected to the first and second segments (2, 3), and all three parts are sealed into the flow meter (20) to be retrofitted, the ultrasonic flow measurement unit is rigidly fixed in position.

14. The multi-part assembly (1) of any of claims 1 to 13, wherein the ultrasonic flow measurement unit (4) comprises a lid configured to form a seal with a rim of an access aperture of the flow meter (20) to be retrofitted.

15. The multi-part assembly (1) of any of claims 1 to 14, wherein the ultrasonic flow measurement unit (4) comprises first and second acoustic transducers (42, 43) and wherein the shape and/or size of the cross section of the flow passage is uniform between the first and second transducers.

16. The multi-part assembly (1) of any of claims 1 to 15, wherein when the first and second flow modifying segments (2, 3) are connected to the ultrasonic flow meter (4), there is a smooth transition between the flow passage (51) of the first segment to the flow passage (36) of the ultrasonic measurement unit (4), and from the flow passage of the ultrasonic measurement unit to the flow passage (61) of the second segment (3).

17. A kit for the multi-part assembly (1) of any one of claims 1 to 16, the kit including:

an ultrasonic flow measurement unit (4);
first and second flow-modifying segments (2, 3) for arranging either side of the ultrasonic flow measurement unit to form a flow passage through the first flow-modifying segment, the ultrasonic flow measurement unit and the second flow-modifying segment between respective distal ends (5, 6) of first and second flow-modifying segments, each of the first and second flow-modifying segments having respective proximal ends (15, 16); and first and second connectors (9, 11) arranged on the respective proximal ends of the first and second flow-modifying segments configured to connect to respective first and second connectors (10, 12) on the ultrasonic flow measurement unit.

18. A method of retrofitting a passage of a mechanical flow meter (20) so as to form an ultrasonic flow meter, the method comprising:

inserting the first segment (2) of any of claims 1 to 16 through an access aperture (24) of the flow meter and positioning the first segment at least partially in a first direction away from the access aperture;
inserting the second segment (3) of any of claims 1 to 16 through the access aperture of the flow meter and positioning the segment at least partially in a second direction away from the access aperture; and
inserting the ultrasonic flow measurement unit (4) of any of claims 1 to 16 through the flow meter aperture and engaging the connectors (10, 12) of the ultrasonic flow measurement unit with the connectors (9, 11) of the first and second segments.

Figure 1

Multi-part assembly to form an ultrasonic flow meter ⌁ 1

| First segment | Ultrasonic flow measurement unit | Second segment |
|---|---|---|
| 2 | 4 | 3 |

## Figure 2

Multi-part assembly kit to form an ultrasonic flow meter ⌁ 18

| First segment | Ultrasonic flow measurement unit | Second segment |
|---|---|---|
| 2 | 4 | 3 |

## Figure 3

Figure 4

Figure 5

Figure 6

Figure 7

Start

S1 | Removing the lid from the access aperture of a flow meter

S2 | Removing the flow meter from the flow meter body

S3 | Inserting a first flow-modifying segment into the flow meter body in a first direction away from the access aperture

S4 | Inserting a second flow-modifying segment into the flow meter body in a second direction away from the access aperture

S5 | Inserting an ultrasonic flow measurement unit into the flow meter body so that it engages with the first and second segments

End

Figure 8

Figure 9

Figure 10

EP 4 682 477 A1

Figure 11

Figure 12

Figure 13

Figure 14

Figure 15

Figure 16

Figure 17

Figure 18

Figure 19

Figure 20

Figure 21

Figure 22

Figure 23

Figure 24

Figure 25

Figure 26

Figure 27

Figure 28

Figure 29

Figure 30

Figure 31

Figure 32

Figure 33

Figure 34

Figure 35

Figure 36

Figure 37

Figure 38

Figure 39

Figure 40

Figure 41

Figure 43

Figure 45

Figure 42

Figure 44

41

Figure 46

Figure 47

Figure 48

Figure 49

## EUROPEAN SEARCH REPORT

**Application Number**

EP 24 18 9175

### DOCUMENTS CONSIDERED TO BE RELEVANT

| Category | Citation of document with indication, where appropriate, of relevant passages | Relevant to claim |
|---|---|---|
| Y | US 8 516 901 B2 (KROEMER HARALD [DE]; OEFELEIN WILHELM [DE]; HYDROMETER GMBH [DE]) 27 August 2013 (2013-08-27)<br>* claim 1 *<br>* figure 1 *<br>----- | 1-18 |
| Y | US 2023/375386 A1 (HELFENSTEIN MARKUS [CH] ET AL) 23 November 2023 (2023-11-23)<br>* figures 5,28,35-36 *<br>* paragraph [0033] *<br>* paragraph [0131] *<br>* paragraph [0150] *<br>* paragraph [0181] *<br>----- | 1-18 |

**CLASSIFICATION OF THE APPLICATION (IPC)**

INV.
G01F1/66
G01F1/667
G01F15/14
G01F15/18

ADD.
G01F1/05

**TECHNICAL FIELDS SEARCHED (IPC)**

G01F

The present search report has been drawn up for all claims

| Place of search | Date of completion of the search | Examiner |
|---|---|---|
| The Hague | 9 December 2024 | Rambaud, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9175

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | | Publication date | Patent family member(s) | | Publication date |
|---|---|---|---|---|---|
| US 8516901 | B2 | 27-08-2013 | DE | 102009048011 A1 | 14-04-2011 |
| | | | EP | 2306160 A1 | 06-04-2011 |
| | | | PL | 2306160 T3 | 31-01-2018 |
| | | | US | 2011079090 A1 | 07-04-2011 |
| US 2023375386 | A1 | 23-11-2023 | CN | 116391111 A | 04-07-2023 |
| | | | DK | 4204769 T3 | 30-09-2024 |
| | | | EP | 4204769 A1 | 05-07-2023 |
| | | | EP | 4204770 A1 | 05-07-2023 |
| | | | ES | 2988649 T3 | 21-11-2024 |
| | | | LT | 4204769 T | 25-11-2024 |
| | | | PT | 4204769 T | 20-09-2024 |
| | | | US | 2023375386 A1 | 23-11-2023 |
| | | | US | 2023417587 A1 | 28-12-2023 |
| | | | WO | 2022079213 A1 | 21-04-2022 |
| | | | WO | 2022079214 A1 | 21-04-2022 |

EPO FORM P0459

For more details about this annex : see Official Journal of the European Patent Office, No. 12/82

**EP 4 682 477 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8516901 B2

**Non-patent literature cited in the description**

- **PARK J.T.** Reynolds Number and Installation Effects on Turbine Meters. *Fluid Flow Measurement 3r6 International Symposium*, March 1995